# FASCICULE DE BREVET EUROPEEN

(11) **EP 3 526 063 B1**
(45) Date de publication et mention de la délivrance du brevet: **30.03.2022**
(21) Numéro de dépôt: 17787516.8
(22) Date de dépôt: 10.10.2017
(51) Int. Cl.: B60H 1/00, B60H 1/14, B60H 1/03, B60H 1/32

(54) **INSTALLATION DE CONDITIONNEMENT THERMIQUE D'UN HABITACLE ET/OU D'AU MOINS UN ORGANE D'UN VÉHICULE AUTOMOBILE**
WÄRMEKONDITIONIERUNGSANLAGE FÜR DEN INNENRAUM UND/ODER MINDESTENS EINEN TEIL EINES KRAFTFAHRZEUGS
THERMAL CONDITIONING INSTALLATION FOR THE INTERIOR AND/OR AT LEAST ONE PART OF A MOTOR VEHICLE

(30) Priorité: 13.10.2016 FR 1659891
(43) Date de publication de la demande: 21.08.2019
(73) Titulaire: Hutchinson, 75008 Paris (FR)
(72) Inventeur: CHOPARD, Fabrice, 75008 Paris (FR); DE CAMPOS GARCIA, Helder Filipe, 75008 Paris (FR); LEBORGNE,Mathieu, 75008 Paris (FR)
(74) Mandataire: Ernest Gutmann - Yves Plasseraud S.A.S.
(86) Numéro de dépôt international: PCT/FR2017/052774
(87) Numéro de publication internationale: WO 2018/069629

(56) Documents cités:
- EP-A1- 2 263 894
- EP-A1- 2 524 829
- EP-A1- 2 611 634
- EP-A2- 2 253 495
- JP-A- 2012 232 730
- JP-A- 2014 019 438
- US-A1- 2015 266 392

## Description

La présente invention concerne une installation de conditionnement thermique d'un habitacle et/ou d'au moins un organe d'un véhicule automobile.

Les installations connues sont aptes à assurer le chauffage ou le refroidissement (climatisation) de l'habitacle d'un véhicule, ainsi que le chauffage ou le refroidissement d'un organe du véhicule, tel que la batterie.

Les véhicules électriques utilisent des moteurs électriques couplés à des onduleurs, ces éléments ayant tendance à chauffer lors de leur utilisation. Par ailleurs, un véhicule hybride comporte également un moteur thermique apte à assurer l'avancement du véhicule, en alternance ou en complément des moteurs électriques.

Afin d'assurer un fonctionnement optimal de ces organes, il est utile de les conditionner thermiquement, c'est-à-dire de maintenir leur température dans une plage de température déterminée. A titre d'exemple, la plage de température optimale d'une batterie est comprise entre 0 et 55°C, de préférence entre 25 et 35°C.

Parallèlement, l'installation doit également pouvoir assurer un conditionnement efficace de l'habitacle, notamment lorsque l'air extérieur est relativement froid ou chaud. Il existe un besoin de pouvoir conditionner rapidement l'habitacle, en particulier lorsque l'habitacle est à des températures très éloignées de la température de confort souhaitée par l'utilisateur.

Les documents JP 2012 232730 et EP 2 263 894 divulguent des installations de conditionnement thermique pour un véhicule automobile.

L'invention a notamment pour but d'apporter une solution simple, efficace et économique à ces problèmes.

A cet effet, elle propose une installation de conditionnement thermique d'un habitacle et/ou d'au moins un organe d'un véhicule automobile selon la revendication 1.

Les moyens de stockage permettent de délivrer très rapidement des calories ou des frigories à l'air débouchant dans l'habitacle du véhicule, de manière à ramener rapidement la température de celui-ci à une température de consigne. Lesdites calories ou frigories peuvent également être utilisées afin de conditionner l'organe du véhicule.

Le premier échangeur de chaleur permet de réaliser une interface entre le circuit de fluide frigorigène et le circuit de fluide caloporteur, de manière à pouvoir utiliser la pompe à chaleur pour refroidir l'organe du véhicule à conditionner, ou encore pour recharger un stockeur de calories, en cas de besoin.

Le circuit de type pompe à chaleur comporte au moins un compresseur, au moins un échangeur de chaleur formant un condenseur, au moins un détendeur et au moins un échangeur de chaleur formant un évaporateur.

Le circuit de type pompe à chaleur peut également comporter un accumulateur, également appelé vase d'expansion, en amont du compresseur.

Le deuxième échangeur est par exemple situé dans un conduit d'une installation de chauffage, ventilation et/ou climatisation, également appelée H.V.A.C. (Heating, Ventilation and Air-Conditioning, en anglais), ledit conduit étant destiné à déboucher dans l'habitacle du véhicule.

Les moyens de stockage peuvent être un stockeur amovible, pouvant être soit un stockeur de calories, soit un stockeur de frigories, en fonction des besoins.

En variante, les moyens de stockage comportent au moins un stockeur de calories et au moins un stockeur de frigorie.

Les moyens de stockage comportent un matériau à changement de phase, par exemple de l'eau, du glycol, une solution saline ou de la paraffine. En particulier, le matériau à changement de phase (MCP) thermique pourra être constitué de n-hexadécane, d'eicosane ou d'un sel de lithium, tous présentant des points de fusion inférieurs à 40°C. En alternative, le matériau MCP peut être à base d'acide gras ou de sel eutectique ou hydraté, ou encore d'alcools gras, par exemple. De tels moyens de stockage thermique permettent d'accumuler de l'énergie thermique (calories ou frigories) par chaleur latente (changement de phase) ou par chaleur sensible.

Le circuit de fluide caloporteur peut comporter un troisième échangeur de chaleur apte à échanger de la chaleur avec de l'air extérieur, les moyens de circulation du fluide caloporteur étant aptes à transférer des frigories issues du troisième échangeur de chaleur vers l'un au moins des organes du véhicule, par exemple vers le moteur thermique ou le moteur électrique, et/ou la batterie.

De cette manière, le troisième échangeur de chaleur permet, au moins en partie, de refroidir l'un au moins des organes du véhicule.

Le troisième échangeur est par exemple situé en face avant du véhicule.

Le troisième échangeur de chaleur permet de compenser un éventuel manque de puissance frigorifique fournie par le premier échangeur, en fonction des conditions externes et/ou internes au véhicule.

Le quatrième échangeur est par exemple situé dans le conduit d'une installation de chauffage, ventilation et/ou climatisation (H.V.A.C.).

Le circuit de fluide frigorigène peut comporter un cinquième échangeur de chaleur apte à former un évaporateur et/ou un condenseur et apte à échanger de la chaleur avec de l'air extérieur au véhicule.

Le cinquième échangeur est par exemple situé en face avant du véhicule.

Le sixième échangeur est par exemple situé dans un conduit d'une installation de type H.V.A.C.

Le circuit de fluide caloporteur peut comporter des premiers moyens de chauffage, tels par exemple qu'une première résistante électrique, apte à chauffer le fluide caloporteur en amont de l'un des organes du véhicule.

Ces premiers moyens de chauffage sont par exemple situés en amont de la batterie, de manière à fonctionner en complément des moyens de refroidissement et/ou de chauffage correspondant.

Le circuit de fluide caloporteur peut comporter des deuxièmes moyens de chauffage, tels par exemple qu'une deuxième résistante électrique, apte à chauffer le fluide caloporteur destiné à circuler dans le stockeur de calories.

Les deuxièmes moyens de chauffage peuvent ainsi fonctionner en complément des éléments déjà présents, pour assurer ou faciliter le stockage de calories dans le stockeur de calories.

L'installation peut comporter des troisièmes moyens de chauffage, tels par exemple qu'une troisième résistance électrique, aptes à chauffer l'air destiné à déboucher dans l'habitacle du véhicule.

Les troisièmes moyens de chauffage peuvent ainsi fonctionner en complément du deuxième échangeur de chaleur et/ou du quatrième échangeur de chaleur, par exemple.

Le circuit de fluide caloporteur peut comporter des moyens de dérivation aptes à dériver tout ou partie du fluide caloporteur hors desdits moyens de chauffage et/ou de refroidissement.

L'installation peut comporter des moyens de circulation du fluide caloporteur et des moyens de circulation du fluide frigorigène conçus pour fonctionner selon l'un au moins des modes suivants :
- un mode (premier mode) dans lequel le fluide caloporteur circule selon une boucle comportant au moins successivement le stockeur de calories, optionnellement les moyens de chauffage et/ou de refroidissement, et le deuxième échangeur,
- un mode (deuxième mode) dans lequel le fluide caloporteur circule selon une boucle comportant au moins successivement les moyens de chauffage et/ou de refroidissement et le premier échangeur, le fluide frigorigène circulant selon une boucle comportant au moins successivement un compresseur, le quatrième échangeur, un premier détendeur, le cinquième échangeur, une première partie du fluide frigorigène traversant ensuite un deuxième détendeur et le premier échangeur avant de revenir au compresseur, tandis qu'une deuxième partie du fluide frigorigène est dérivée vers le compresseur,
- un mode (troisième mode) dans lequel le fluide caloporteur circule selon une première boucle comportant au moins successivement les moyens de chauffage et/ou de refroidissement d'un premier organe, tel qu'une batterie, et le premier échangeur, et optionnellement selon une deuxième boucle comportant au moins successivement des moyens de chauffage et/ou de refroidissement d'un deuxième organe, tel qu'un moteur électrique, et/ou des moyens de chauffage et/ou de refroidissement d'un troisième organe, tel qu'un moteur thermique, et le troisième échangeur, le fluide frigorigène circulant selon une boucle comportant au moins successivement le compresseur, le quatrième échangeur, le premier détendeur, le cinquième échangeur, une première partie du fluide frigorigène traversant ensuite le premier échangeur avant de revenir au compresseur, tandis qu'une deuxième partie du fluide frigorigène est dérivée vers le compresseur,
- un mode (quatrième mode) dans lequel le fluide caloporteur circule selon une première boucle comportant au moins successivement les moyens de chauffage et/ou de refroidissement (M1, M2) du premier organe et/ou du deuxième organe, et le premier échangeur, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le quatrième échangeur, le premier détendeur, le cinquième échangeur, une première partie du fluide frigorigène traversant ensuite le premier échangeur avant de revenir au compresseur, tandis qu'une deuxième partie du fluide frigorigène est dérivée vers le compresseur,
- un mode (cinquième mode) dans lequel le fluide caloporteur circule selon une boucle comportant au moins successivement les moyens de chauffage et/ou de refroidissement et le premier échangeur, le fluide frigorigène circulant selon une boucle comportant au moins successivement le compresseur, le quatrième échangeur, le deuxième détendeur et le premier échangeur,
- un mode (sixième mode) dans lequel le fluide caloporteur circule selon une première boucle comportant au moins successivement les moyens de chauffage et/ou de refroidissement du premier organe, et le premier échangeur, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le quatrième échangeur, le deuxième détendeur et le premier échangeur,
- un mode (septième mode) dans lequel le fluide caloporteur circule selon une première boucle comportant au moins successivement les moyens de chauffage et/ou de refroidissement du premier organe et/ou du deuxième organe, et le premier échangeur, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le quatrième échangeur, le deuxième détendeur et le premier échangeur,
- un mode (huitième mode) dans lequel le fluide caloporteur circule selon une boucle comportant au moins successivement le stockeur de calories et les moyens de chauffage et/ou de refroidissement, le fluide frigorigène circulant selon une boucle comportant au moins successivement le compresseur, le quatrième échangeur, le premier détendeur, et le cinquième échangeur,
- un mode (neuvième mode) dans lequel le fluide caloporteur circule selon une première boucle comportant au moins successivement le stockeur de calories et les moyens de chauffage et/ou de refroidissement du premier organe, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le quatrième échangeur, le premier détendeur et le cinquième échangeur,
- un mode (dixième mode) dans lequel le fluide caloporteur circule selon une première boucle comportant au moins successivement le stockeur de calories et les moyens de chauffage et/ou de refroidissement du premier organe et/ou du deuxième organe, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le quatrième échangeur, le premier détendeur et le cinquième échangeur,
- un mode (onzième mode, douzième mode ou vingt-cinquième mode) dans lequel le fluide caloporteur circule selon une boucle comportant au moins successivement les moyens de chauffage et/ou de refroidissement, et le troisième échangeur,
- un mode (treizième mode) dans lequel le fluide caloporteur circule selon une boucle comportant au moins successivement les moyens de chauffage et/ou de refroidissement du deuxième organe et/ou du troisième organe, et le troisième échangeur,
- un mode (quatorzième mode) dans lequel le fluide caloporteur circule selon une boucle comportant au moins successivement les moyens de chauffage et/ou de refroidissement, et le troisième échangeur, le fluide frigorigène circulant selon une boucle comportant au moins successivement le compresseur, le quatrième échangeur, le premier détendeur, et le cinquième échangeur,
- un mode (quinzième mode) dans lequel le fluide caloporteur circule selon une première boucle comportant au moins successivement les moyens de chauffage et/ou de refroidissement, et le premier échangeur, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le quatrième échangeur, le premier détendeur, le deuxième détendeur et le premier échangeur,
- un mode (seizième mode) dans lequel le fluide caloporteur circule selon une première boucle comportant au moins successivement les moyens de chauffage et/ou de refroidissement du premier organe, et le premier échangeur, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le quatrième échangeur, le deuxième détendeur et le premier échangeur,
- un mode (dix-septième mode) dans lequel le fluide caloporteur circule selon une boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le cinquième échangeur, un troisième détendeur et le sixième échangeur,
- un mode (dix-huitième mode) dans lequel le fluide caloporteur circule selon une première boucle comportant au moins successivement les moyens de chauffage et/ou de refroidissement du premier organe, et le premier échangeur, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,
- un mode (dix-neuvième mode) dans lequel le fluide caloporteur circule selon une première boucle comportant au moins successivement les moyens de chauffage et/ou de refroidissement du premier organe et/ou du deuxième organe, et le premier échangeur, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,
- un mode (vingtième mode) dans lequel le fluide caloporteur circule selon une boucle comportant au moins successivement le stockeur de frigories, optionnellement les moyens de chauffage et/ou de refroidissement, et le deuxième échangeur,
- un mode (vingt-et-unième mode) dans lequel le fluide caloporteur circule selon une boucle comportant au moins successivement les moyens de chauffage et/ou de refroidissement, et le premier échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,
- un mode (vingt-deuxième mode) dans lequel le fluide caloporteur circule selon une première boucle comportant au moins successivement les moyens de chauffage et/ou de refroidissement du premier organe, et le premier échangeur, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,
- un mode (vingt-troisième mode) dans lequel le fluide caloporteur circule selon une première boucle comportant au moins successivement les moyens de chauffage et/ou de refroidissement du premier organe et/ou du deuxième organe, et le premier échangeur, et optionnellement selon une deuxième boucle comportant au moins successivement les moyens de chauffage et/ou de refroidissement du troisième organe, et le troisième échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,

- un mode (vingt-quatrième mode) dans lequel le fluide caloporteur circule selon une boucle comportant au moins successivement les moyens de chauffage et/ou de refroidissement, et le troisième échangeur, le fluide frigorigène circulant selon une boucle comportant au moins successivement le compresseur, le cinquième échangeur, le troisième détendeur et le sixième échangeur,
- un mode (vingt-cinquième mode) dans lequel le fluide caloporteur circule selon une première boucle comportant au moins successivement le stockeur de frigories, optionnellement les moyens de chauffage et/ou de refroidissement du premier organe, et le premier échangeur, et optionnellement selon une deuxième boucle comportant au moins successivement les moyens de chauffage et/ou de refroidissement du deuxième organe et/ou du troisième organe, et le troisième échangeur, le fluide frigorigène circulant selon une boucle comportant au moins successivement le compresseur, le cinquième échangeur, une première partie du fluide frigorigène traversant ensuite le deuxième détendeur et le premier échangeur avant de revenir au compresseur, tandis qu'une deuxième partie du fluide frigorigène traverse ensuite le troisième détendeur et le sixième échangeur avant de revenir au compresseur,

Les modes 1 à 11 sont des modes de fonctionnement dans lesquels l'air extérieur au véhicule est relativement froid, par exemple inférieur à 15°C.

Les modes 12 à 18 sont des modes de fonctionnement dans lesquels l'air extérieur au véhicule est tempéré, par exemple compris entre 15 et 25°C.

Les modes 19 à 25 sont des modes de fonctionnement dans lesquels l'air extérieur au véhicule est chaud, par exemple supérieur à 25°C.

Bien entendu, les exemples de températures indiqués ci-dessus peuvent différer, en fonction du dimensionnement des différents éléments de l'installation et des applications. Par ailleurs, l'ensoleillement peut également être pris en compte dans le choix des modes de fonctionnement.

Dans le premier mode, les calories sont transférées du stockeur de calories vers le ou les organes du véhicule à chauffer, tels par exemple que la batterie, le ou les moteurs électriques et/ou les onduleurs correspondants, et/ou le moteur thermique. Les calories issues du stockeur de calories sont également transférées au deuxième échangeur, de façon à chauffer rapidement l'habitacle du véhicule et assurer le confort des utilisateurs. Un tel mode correspond par exemple à un mode de démarrage à froid du véhicule.

Dans le deuxième mode, le premier échangeur permet de refroidir le fluide caloporteur, de façon à refroidir le ou les organes du véhicule. Par ailleurs, le quatrième échangeur, formant un condenseur, permet de chauffer l'air destiné à l'habitacle.

Dans le troisième mode, le premier organe est refroidi à l'aide des frigories fournies par le premier échangeur. Le deuxième organe et/ou le troisième organe sont refroidis à l'aide des frigories fournies par l'air extérieur, via le troisième échangeur. Comme précédemment, le quatrième échangeur permet de chauffer l'air destiné à l'habitacle.

Dans le quatrième mode, le premier organe et/ou le deuxième organe sont refroidis à l'aide des frigories fournies par le premier échangeur. Le troisième organe est refroidi à l'aide des frigories fournies par l'air extérieur, via le troisième échangeur. Comme précédemment, le quatrième échangeur permet de chauffer l'air destiné à l'habitacle.

Dans le cinquième mode, le premier organe, le deuxième organe et/ou le troisième organe sont refroidis à l'aide des frigories fournies par le premier échangeur. Comme précédemment, le quatrième échangeur permet de chauffer l'air destiné à l'habitacle.

Dans le sixième mode, le premier organe est refroidi à l'aide des frigories fournies par le premier échangeur. Le deuxième organe et/ou le troisième organe sont refroidis à l'aide des frigories fournies par l'air extérieur, via le troisième échangeur. Comme précédemment, le quatrième échangeur permet de chauffer l'air destiné à l'habitacle.

Dans le septième mode, le premier organe et/ou le deuxième organe sont refroidis à l'aide des frigories fournies par le premier échangeur. Le troisième organe est refroidi à l'aide des frigories fournies par l'air extérieur, via le troisième échangeur. Comme précédemment, le quatrième échangeur permet de chauffer l'air destiné à l'habitacle.

Dans le huitième mode, le stockeur de calories est rechargé par les calories issues de réchauffement du ou des différents organes du véhicule lors de leur utilisation. Comme précédemment, le quatrième échangeur permet de chauffer l'air destiné à l'habitacle.

Dans le neuvième mode, le stockeur de calories est rechargé par les calories issues de réchauffement du premier organe. Par ailleurs, le deuxième organe et/ou le troisième organe sont refroidis par les frigories fournies par l'air extérieur, via le troisième échangeur. Comme précédemment, le quatrième échangeur permet de chauffer l'air destiné à l'habitacle.

Dans le dixième mode, le stockeur de calories est rechargé par les calories issues de réchauffement du premier organe et/ou du deuxième organe. Par ailleurs, le troisième organe est refroidi par les frigories fournies par l'air extérieur, via le troisième échangeur. Comme précédemment, le quatrième échangeur permet de chauffer l'air destiné à l'habitacle.

Dans le onzième mode, le premier organe, le second organe et/ou le troisième organe sont refroidis par les frigories fournies par l'air extérieur, via le troisième échangeur.

Les modes 2 à 11 peuvent intervenir par exemple après une certaine durée d'utilisation du véhicule, lorsque les organes précités sont relativement chauds du fait de leur utilisation.

Dans le douzième mode, le premier organe, le deuxième organe et/ou le troisième organe sont refroidis par les frigories fournies par l'air extérieur, via le troisième échangeur.

Dans le treizième mode, le premier organe, le deuxième organe et/ou le troisième organe sont refroidis par les frigories fournies par l'air extérieur, via le troisième échangeur. Par ailleurs, le quatrième échangeur permet de chauffer l'air destiné à l'habitacle.

Dans le quatorzième mode, le premier organe et/ou le deuxième organe sont refroidis à l'aide des frigories fournies par le premier échangeur. Le troisième organe est refroidi à l'aide des frigories fournies par l'air extérieur, via le troisième échangeur. Comme précédemment, le quatrième échangeur permet de chauffer l'air destiné à l'habitacle.

Dans le quinzième mode, le premier organe est refroidi à l'aide des frigories fournies par le premier échangeur. Le deuxième organe et/ou le troisième organe sont refroidis à l'aide des frigories fournies par l'air extérieur, via le troisième échangeur. Comme précédemment, le quatrième échangeur permet de chauffer l'air destiné à l'habitacle.

Dans le seizième mode, le deuxième organe et/ou le troisième organe sont refroidis à l'aide des frigories fournies par l'air extérieur, via le troisième échangeur. Par ailleurs, le sixième échangeur, formant un évaporateur, permet de refroidir l'air destiné à l'habitacle.

Dans le dix-septième mode, le premier organe est refroidi à l'aide des frigories fournies par le premier échangeur. Le deuxième organe et/ou le troisième organe sont refroidis à l'aide des frigories fournies par l'air extérieur, via le troisième échangeur. Comme précédemment, le sixième échangeur permet de refroidir l'air destiné à l'habitacle.

Dans le dix-huitième mode, le premier organe et/ou le deuxième organe sont refroidis à l'aide des frigories fournies par le premier échangeur. Le troisième organe est refroidi à l'aide des frigories fournies par l'air extérieur, via le troisième échangeur. Comme précédemment, le sixième échangeur permet de refroidir l'air destiné à l'habitacle.

Dans le dix-neuvième mode, les frigories sont transférées du stockeur de frigories vers le ou les organes du véhicule à refroidir, tels par exemple que la batterie et/ou le ou les moteurs électriques et/ou les onduleurs correspondants, et/ou le moteur thermique. Les frigories issues du stockeur de frigories sont également transférées au deuxième échangeur, de façon à refroidir rapidement l'habitacle du véhicule et assurer le confort des utilisateurs.

Dans le vingtième mode, le premier organe, le deuxième organe et/ou le troisième organe sont refroidis à l'aide des frigories fournies par le premier échangeur. Par ailleurs, le sixième échangeur permet de refroidir l'air destiné à l'habitacle.

Dans le vingt-et-unième mode, le premier organe est refroidi à l'aide des frigories fournies par le premier échangeur. Le deuxième organe et/ou le troisième organe sont refroidis à l'aide des frigories fournies par l'air extérieur, via le troisième échangeur. Comme précédemment, le sixième échangeur permet de refroidir l'air destiné à l'habitacle.

Dans le vingt-deuxième mode, le premier organe et/ou le deuxième organe sont refroidis à l'aide des frigories fournies par le premier échangeur. Le troisième organe est refroidi à l'aide des frigories fournies par l'air extérieur, via le troisième échangeur. Comme précédemment, le sixième échangeur permet de refroidir l'air destiné à l'habitacle.

Dans le vingt-troisième mode, le premier organe, le deuxième organe et/ou le troisième organe sont refroidis à l'aide des frigories fournies par l'air extérieur, via le troisième échangeur. Comme précédemment, le sixième échangeur permet de refroidir l'air destiné à l'habitacle.

Dans le vingt-quatrième mode, le stockeur de frigories est rechargé à l'aide des frigories fournies par le premier échangeur, une partie de ces frigories pouvant être utilisée pour refroidir le premier organe. Le deuxième organe et/ou le troisième organe sont refroidis à l'aide des frigories fournies par l'air extérieur, via le troisième échangeur. Comme précédemment, le sixième échangeur permet de refroidir l'air destiné à l'habitacle.

Dans le vingt-cinquième mode, le premier organe, le second organe et/ou le troisième organe sont refroidis par les frigories fournies par l'air extérieur, via le troisième échangeur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique d'une installation de conditionnement thermique d'un habitacle et/ou d'au moins un organe d'un véhicule automobile, selon une forme de réalisation de l'invention,
- les figures 2 à 26 sont des vues schématiques correspondant à la figure 1 et illustrant différentes modes de fonctionnement de l'installation.

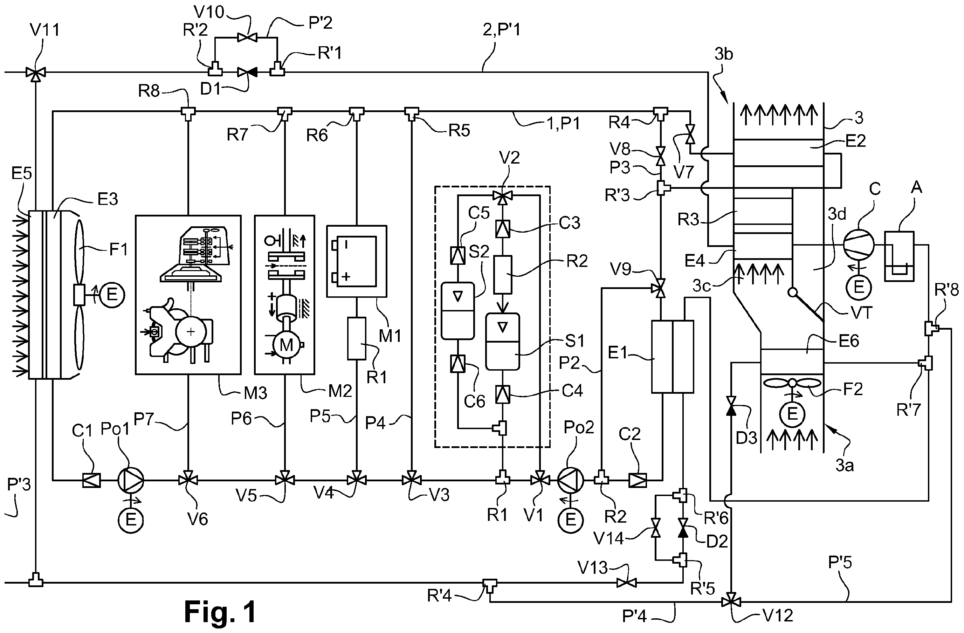

- La figure 1 représente installation de conditionnement thermique d'un habitacle et/ou de différents organes d'un véhicule automobile, selon une forme de réalisation de l'invention.

Cette installation comporte un circuit 1 de circulation d'un fluide caloporteur, tel par exemple que de l'eau glycolée.

Le circuit 1 de fluide caloporteur comporte :
- une première pompe Po1,
- une seconde pompe Po2,
- un premier échangeur de chaleur E1 apte à échanger de la chaleur avec un fluide frigorigène,
- un second échangeur de chaleur E2 apte à échanger de la chaleur avec de l'air,
- un troisième échangeur de chaleur E3 apte à échanger de la chaleur avec de l'air,
- des moyens de stockage de calories S1 (également appelé stockeur chaud),
- des moyens de stockage de frigories S2 (également appelé stockeur froid),
- des premiers moyens de chauffage R1 du fluide caloporteur, tels par exemple qu'une résistance électrique,
- des seconds moyens de chauffage R2 du fluide du fluide caloporteur, tels par exemple qu'une résistance électrique,
- des clapets anti-retours C1, C2, C3, C4, C5, C6,
- des vannes à trois voies V1, V2, V3, V4, V5, V6, V9, les différentes voies de ces vannes pouvant être commandées et thermostatées,
- des vannes d'arrêt V7, V8, ces vannes pouvant être commandées et thermostatées,
- des moyens M1 de chauffage et/ou de refroidissement d'un premier organe du véhicule, tel qu'au moins une batterie du véhicule,
- des moyens M2 de chauffage et/ou de refroidissement d'un deuxième organe du véhicule, tel qu'au moins un moteur électrique du véhicule et/ou des organes associés tels qu'un onduleur par exemple,
- des moyens M3 de chauffage et/ou de refroidissement d'un troisième organe du véhicule, tel qu'un moteur thermique du véhicule, destinés en particulier à chauffer et/ou refroidir le circuit d'huile du moteur thermique.

Plus particulièrement, le circuit 1 de fluide caloporteur comporte :
- une portion P1 formant une boucle s'étendant de l'entrée de la pompe Po1 à la sortie de la pompe Po1 et comportant successivement, en partant de la sortie de la pompe Po1, la vanne V6, la vanne V5, la vanne V4, la vanne V3, un embranchement ou point de raccordement R'1, la vanne V1, la pompe Po2, un embranchement R2, le clapet C2, l'échangeur E1, la vanne V9, un embranchement R'3, l'échangeur E2, la vanne V7, un embranchement R4, un embranchement R5, un embranchement R6, un embranchement R7, un embranchement R8, le troisième échangeur E3, le clapet C1 et la pompe Po1,
- une portion P2 de dérivation reliant l'embranchement R2 et la vanne V9,
- une portion P3 de dérivation reliant l'embranchement R3 et l'embranchement R4, ladite portion P3 comportant la vanne V8,
- une portion P4 de dérivation reliant l'embranchement R5 et la vanne V3,
- une portion P5 reliant l'embranchement R6 et la vanne V4, ladite portion P5 comportant, depuis l'embranchement R6 vers la vanne V4, les moyens de chauffage et/ou de refroidissement M1 et les moyens de chauffage R1,
- une portion P6 reliant l'embranchement R7 et la vanne V5, ladite portion P6 comportant les moyens de chauffage et/ou de refroidissement M2,
- une portion P7 reliant l'embranchement R8 et la vanne V6, ladite portion P7 comportant les moyens de chauffage et/ou de refroidissement M3.

L'installation comporte en outre un circuit 2 de circulation d'un fluide frigorigène.

Le fluide réfrigérant est par exemple du type d'un fluide supercritique, tel que du dioxyde de carbone, par exemple, connu sous l'appellation R744. Il peut aussi être un fluide sous-critique, tel que l'hydrofluorocarbone connu sous l'acronyme R134a ou un fluide frigorigène à faible nuisance sur l'effet de serre, c'est-à-dire qui soit en mesure d'offrir une solution durable pour les climatiseurs automobiles, connu sous la dénomination HFO1234yf.

Le circuit 2 de fluide frigorigène comporte :
- un compresseur C,
- un quatrième échangeur de chaleur E4, apte à former un condenseur,
- un cinquième échangeur de chaleur E5, apte à former un évaporateur et/ou un condenseur,
- un sixième échangeur de chaleur E6, apte à former un évaporateur,
- un premier détendeur D1,
- un deuxième détendeur D2,
- un troisième détendeur D3,
- un accumulateur A,
- des vannes à trois voies V11, V12, les différentes voies de ces vannes pouvant être commandées et thermostatées,
- des vannes d'arrêt V10, V13, V14, ces vannes pouvant être commandées et thermostatées.

Les détendeurs D1, D2, D3 peuvent être à perte de charge fixe et/ou à ouverture variable ou à perte de charge variable, ladite ouverture ou ladite perte de charge étant apte à être régulée par l'intermédiaire de moyens de commande non représentés.

Plus particulièrement, le circuit 2 de fluide frigorigène comporte :
- une portion P'1 formant une boucle s'étendant de l'entrée du compresseur C à la sortie du compresseur C et comportant successivement, en partant de la sortie du compresseur C, l'échangeur E4, un embranchement R'1, le détendeur D1, un embranchement R'2, la vanne V11, l'échangeur E5, un embranchement R'3, un embranchement R'4, la vanne V13, un embranchement R'5, le détendeur D2, un embranchement R'6, l'échangeur E1, un embranchement R'7, un embranchement R'8, l'accumulateur A et le compresseur C,
- une portion P'2 de dérivation reliant l'embranchement R'1 et l'embranchement R'2, ladite portion P'2 comportant la vanne V10,
- une portion P'3 de dérivation reliant la vanne V11 et l'embranchement R'3,
- une portion P'4 reliant l'embranchement R'4 et l'embranchement R'7 et comportant, de l'embranchement R'4 vers l'embranchement R'7, la vanne V12, le détendeur D3 et l'échangeur E6,
- une portion P'5 de dérivation reliant la vanne V12 à l'embranchement R'8.

Les échangeurs E2, E4, E6 sont situés dans un conduit 3 de circulation d'air d'une installation de chauffage, ventilation et/ou climatisation, également appelée H.V.A.C. (Heating, Ventilation and Air-Conditioning, en anglais), ledit conduit 3 étant destiné à déboucher dans l'habitacle du véhicule.

Le conduit 3 comporte une zone amont au niveau de laquelle est introduit de l'air issu de l'extérieur du véhicule, une zone médiane, et une zone aval. Les termes « amont » et « aval » sont définis par rapport au sens de circulation de l'air dans le conduit, ce sens étant représenté par des flèches sur la figure 1. L'échangeur E6 est monté dans la zone amont 3a du conduit 3. L'échangeur E2 est monté dans la zone aval 3b du conduit 3. La zone médiane est séparée en deux canaux, à savoir un premier canal 3c dans lequel est monté l'échangeur E4, et un second canal 3d. Les deux canaux 3c et 3d se rejoignent au niveau de la zone aval 3b du conduit 3. Des moyens de chauffage R3, tels par exemple qu'une résistance électrique, sont montés dans le canal 3c, par exemple en aval de l'échangeur E4.

Un volet VT dont la position est commandée est situé en amont des canaux 3c et 3d et permet de faire circuler le fluide sélectivement dans le canal 3c ou dans le canal 3d. Le volet VT peut également faire circuler une partie déterminée du fluide dans le canal 3c et une partie déterminée du fluide dans le canal 3d.

L'installation comporte en outre un ventilateur F1 permettant de forcer le passage d'air extérieur au travers des échangeurs E3 et E5, situés par exemple en face avant du véhicule, et un second ventilateur F2, monté par exemple dans la zone amont 3a du conduit 3, de façon à forcer le passage d'air au travers du conduit 3.

Les pompes Po1,Po2, le compresseur C et les ventilateurs F1, F2 sont actionnés par des moteurs électriques.

L'installation comporte en outre des capteurs permettant de mesurer par exemple la température, le débit et/ ou la pression du fluide caloporteur, du fluide frigorigène et/ou de l'air, des moyens de commande permettant de commander les différents actionneurs (moteurs, vannes, etc...) et des moyens de calculs ayant notamment en entrée les informations issues desdits capteurs et permettant de délivrer en sortie, des informations envoyées auxdits moyens de commande.

Bien entendu, la forme de réalisation illustrée à la figure 1 n'est pas limitative, d'autres formes de réalisation pouvant être envisagées pour assurer les fonctions décrites ci-après.

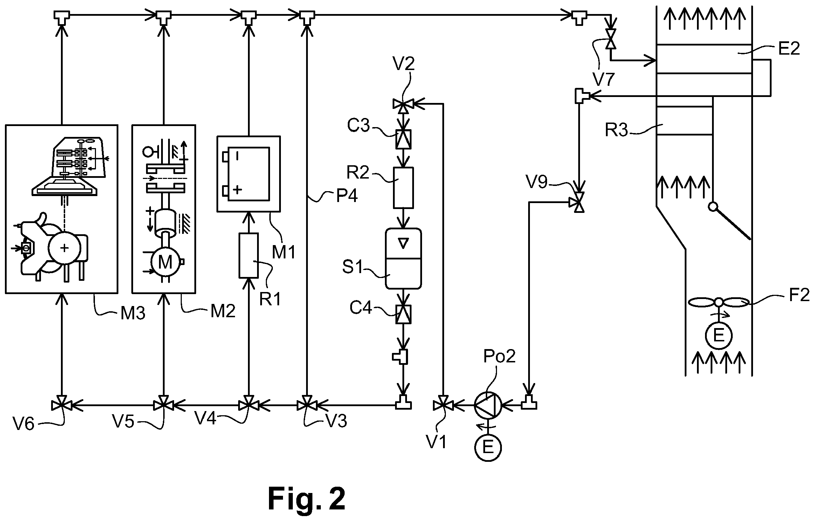

On décrira à présent en référence aux figures 2 à 12, différents modes de fonctionnement dans lesquels l'air extérieur au véhicule est relativement froid, par exemple inférieur à 15°C.

Dans chacun des modes décrits ci-après, seuls les éléments actifs, remplissant une fonction ou au travers desquels circulent les fluides caloporteur et frigorigène, ont été représentés, de façon à faciliter la compréhension.

La figure 2 illustre un premier mode de fonctionnement de l'installation, dans lequel le fluide caloporteur traverse successivement la pompe Po2, la vanne V1, le vanne V2, le clapet C3, les moyens de chauffage R2 (actifs ou non en fonction des besoins), le stockeur de calories S1 (celui-ci étant complètement chargé en calories), le fluide caloporteur pouvant ensuite traverser l'un ou plusieurs des moyens de chauffage et/ou de refroidissement R1 et M1 (les moyens R1 étant actifs ou non), M2, M3, par l'intermédiaire des vannes V4, V5, V6, et/ou être dérivé desdits moyens R1 et M1 (les moyens R1 étant actifs ou non), M2, M3, par l'intermédiaire de la conduite P4 et de la vanne V3, l'ensemble du fluide caloporteur traversant ensuite la vanne V7, l'échangeur E2 et la vanne V9 avant de traverser à nouveau la pompe Po2.

Dans ce premier mode, les calories peuvent être transférées du stockeur de calories S1 vers le ou les organes du véhicule à chauffer, tels par exemple que la batterie, le ou les moteurs électriques et/ou les onduleurs correspondants, et/ou le moteur thermique, par l'intermédiaire des moyens R1 et M1 (les moyens R1 étant actifs ou non), M2, M3, et/ou à l'échangeur E2, de façon à chauffer rapidement l'habitacle du véhicule et assurer le confort des utilisateurs. Un tel mode correspond par exemple à un mode de démarrage à froid du véhicule.

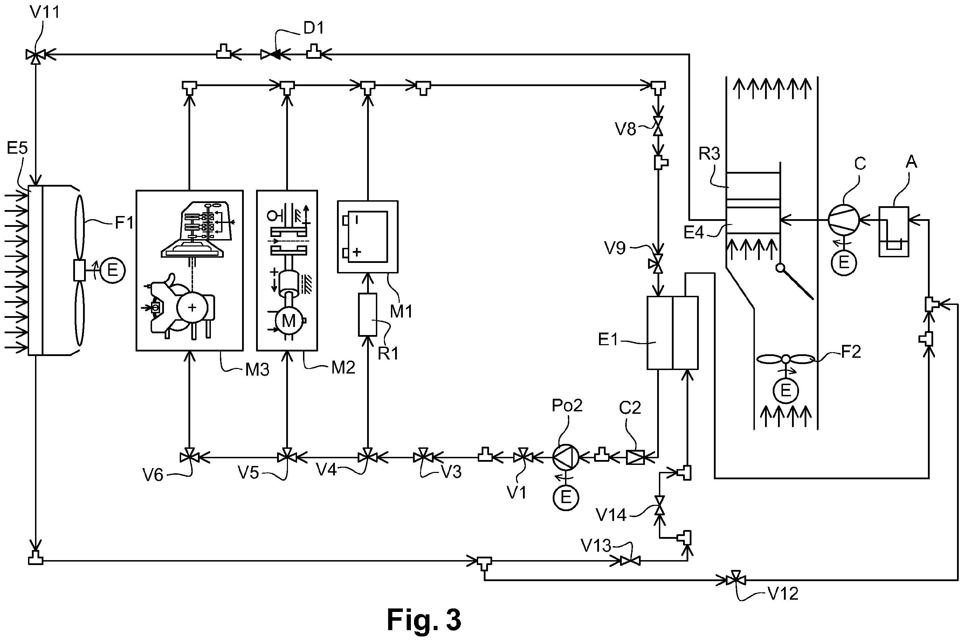

La figure 3 illustre un deuxième mode de fonctionnement de l'installation, dans lequel :
- le fluide caloporteur issu de la pompe Po2 traverse successivement la vanne V1, la vanne V3, au moins l'un des moyens de chauffage et/ou de refroidissement R1 et M1 (les moyens R1 étant actifs ou non), M2, M3 par l'intermédiaire des vannes V4, V5, V6, la vanne V8, la vanne V9, l'échangeur E1 et le clapet C2, avant de traverser à nouveau la pompe Po2,
- le fluide frigorigène issu du compresseur C traverse successivement l'échangeur E4, le détendeur D1, la vanne V11, l'échangeur E5, une première partie du fluide frigorigène traversant ensuite la vanne V13, la vanne V14, l'échangeur E1 et l'accumulateur A avant de traverser à nouveau le compresseur C, tandis qu'une deuxième partie du fluide frigorigène est dérivée en amont de l'accumulateur A par l'intermédiaire de la vanne V12.

Dans ce deuxième mode, l'échangeur E1 permet de refroidir le fluide caloporteur, de façon à refroidir le ou les organes du véhicule au travers des moyens R1 et M1 (les moyens R1 étant actifs ou non), M2, M3. Par ailleurs, l'échangeur E4, formant un condenseur, permet de chauffer l'air destiné à l'habitacle. Les moyens de chauffage E3 peuvent également être activés en complément, en fonction des besoins.

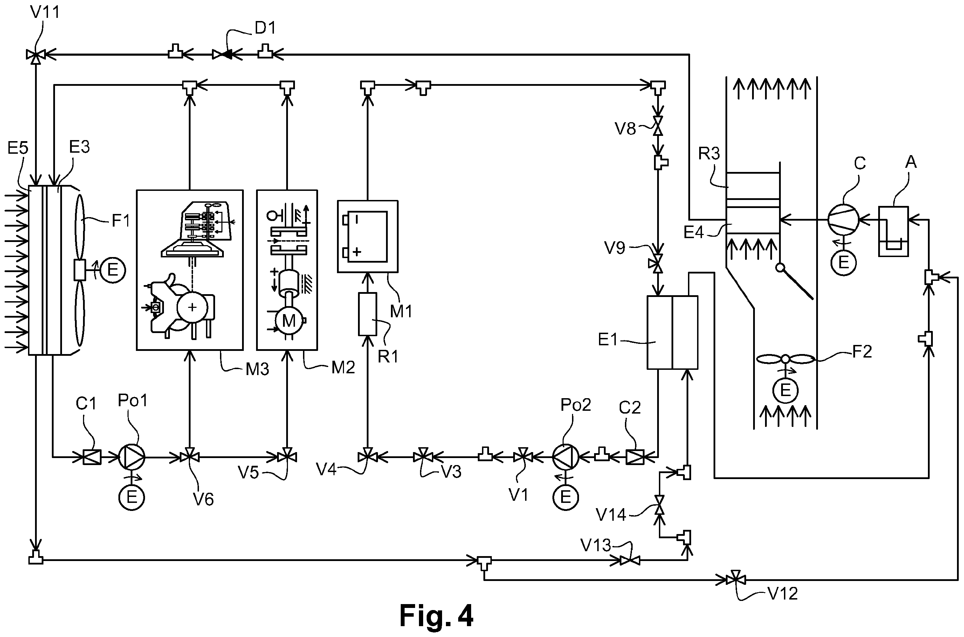

La figure 4 illustre un troisième mode de fonctionnement de l'installation, dans lequel :
- le fluide caloporteur circule selon une première boucle dans laquelle le fluide issu de la pompe Po2 traverse successivement la vanne V1, la vanne V3, la vanne V4, les moyens de chauffage R1 (actifs ou non en fonction des besoins), les moyens de chauffage et/ou de refroidissement M1, la vanne V8, la vanne V9, l'échangeur E1 et le clapet C2, avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4, le détendeur D1, la vanne V11, l'échangeur E5, une première partie du fluide frigorigène traversant ensuite la vanne V13, la vanne V14, l'échangeur E1 et l'accumulateur A avant de traverser à nouveau le compresseur C, tandis qu'une deuxième partie du fluide frigorigène est dérivée en amont de l'accumulateur A, au travers de la vanne V12.

Dans le troisième mode, le premier organe est refroidi à l'aide des frigories fournies par l'échangeur E1. Le deuxième organe et/ou le troisième organe sont refroidis à l'aide des frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

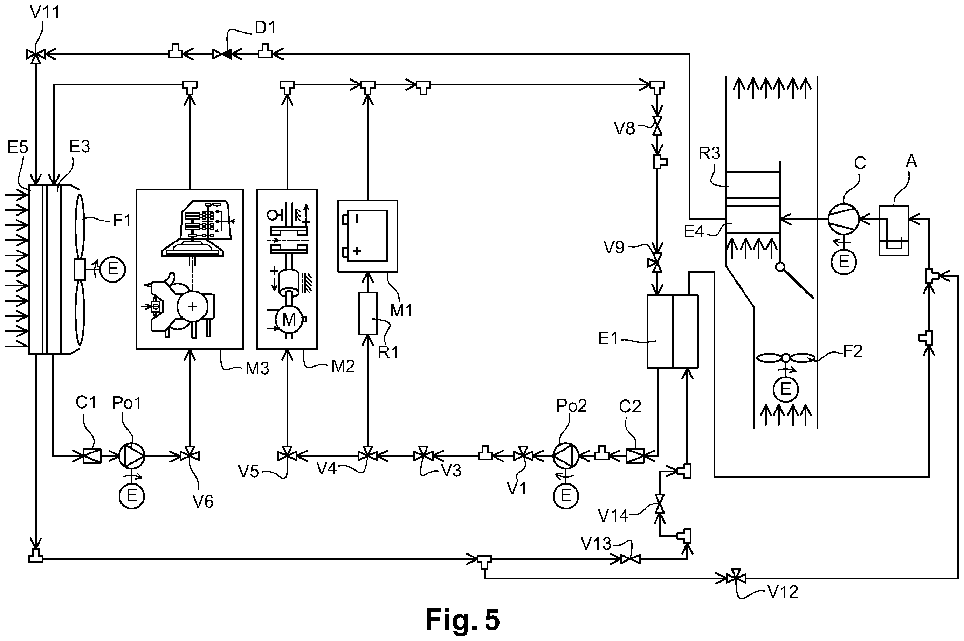

La figure 5 illustre un quatrième mode de fonctionnement de l'installation, dans lequel :
- le fluide caloporteur circule selon une première boucle dans laquelle le fluide caloporteur issu de la pompe Po2 traverse successivement, la vanne V1, les moyens R1 et M1 (les moyens R1 étant actifs ou non en fonction des besoins) et/ou les moyens M2, par l'intermédiaire des vannes V4, V5, la vanne V8, la vanne V9, l'échangeur E1 et le clapet C2 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4, le détendeur D1, la vanne V11, l'échangeur E5, une première partie du fluide frigorigène traversant ensuite la vanne V13, la vanne V14, l'échangeur E1 et l'accumulateur A avant de traverser à nouveau le compresseur C, tandis qu'une deuxième partie du fluide frigorigène est dérivée en amont de l'accumulateur A, par l'intermédiaire de la vanne V12,

Dans le quatrième mode, le premier organe et/ou le deuxième organe sont refroidis à l'aide des frigories fournies par l'échangeur E1. Le troisième organe est refroidi à l'aide des frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

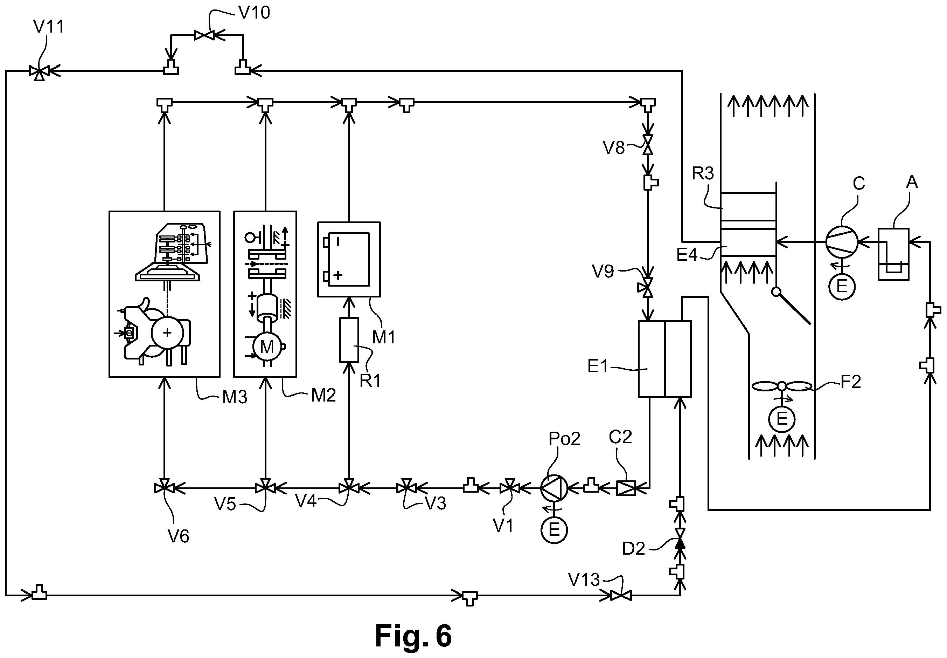

La figure 6 illustre un cinquième mode de fonctionnement de l'installation, dans lequel :
- le fluide caloporteur issu de la pompe Po2 traverse successivement la vanne V1, la vanne V3, au moins l'un des moyens de chauffage et/ou de refroidissement R1 et M1 (les moyens R1 étant actifs ou non), M2, M3 par l'intermédiaire des vannes V4, V5, V6, la vanne V8, la vanne V9, l'échangeur E1 et le clapet C2, avant de traverser à nouveau la pompe Po2,
- le fluide frigorigène issu du compresseur C traverse successivement l'échangeur E4, la vanne V10, la vanne V11, la vanne V13, le détendeur D2, l'échangeur E1 et l'accumulateur A, avant de traverser à nouveau le compresseur C.

Dans le cinquième mode, le premier organe, le deuxième organe et/ou le troisième organe sont refroidis à l'aide des frigories fournies par l'échangeur E1. Comme précédemment, l'échangeur E4 permet de chauffer l'air destiné à l'habitacle. Les moyens de chauffage R3 peuvent être activés en complément, en fonction des besoins.

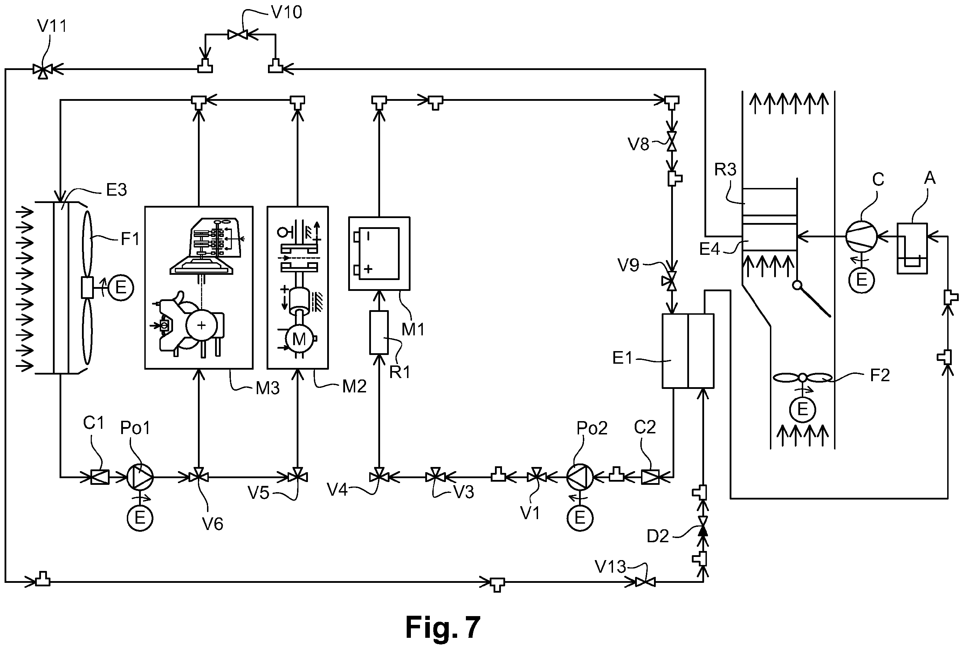

La figure 7 illustre un sixième mode de fonctionnement de l'installation, dans lequel :
- le fluide caloporteur circule selon une première boucle dans laquelle le fluide issu de la pompe Po2 traverse successivement la vanne V1, la vanne V3, la vanne V4, les moyens de chauffage R1 (actifs ou non en fonction des besoins), les moyens de chauffage et/ou de refroidissement M1, la vanne V8, la vanne V9, l'échangeur E1 et le clapet C2, avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4, la vanne V10, la vanne V11, la vanne V13, le détendeur D2, l'échangeur E1 et l'accumulateur A, avant de traverser à nouveau le compresseur C.

Dans le sixième mode, le premier organe est refroidi à l'aide des frigories fournies par l'échangeur E1. Le deuxième organe et/ou le troisième organe sont refroidis à l'aide des frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

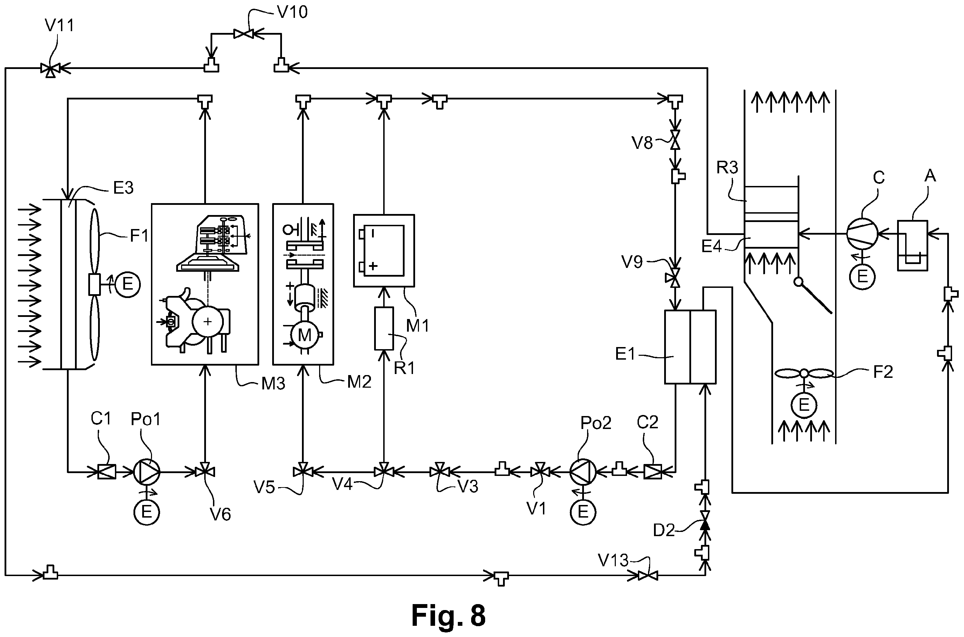

La figure 8 illustre un septième mode de fonctionnement de l'installation, dans lequel :
- le fluide caloporteur circule selon une première boucle dans laquelle le fluide caloporteur issu de la pompe Po2 traverse successivement, la vanne V1, les moyens R1 et M1 (les moyens R1 étant actifs ou non en fonction des besoins) et/ou les moyens M2, par l'intermédiaire des vannes V4, V5, la vanne V8, la vanne V9, l'échangeur E1 et le clapet C2 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4, la vanne V10, la vanne V11, la vanne V13, le détendeur D2, l'échangeur E1 et l'accumulateur A, avant de traverser à nouveau le compresseur C.

Dans le septième mode, le premier organe et/ou le deuxième organe sont refroidis à l'aide des frigories fournies par l'échangeur E1. Le troisième organe est refroidi à l'aide des frigories fournies par l'air extérieur, via l'échangeur E3.

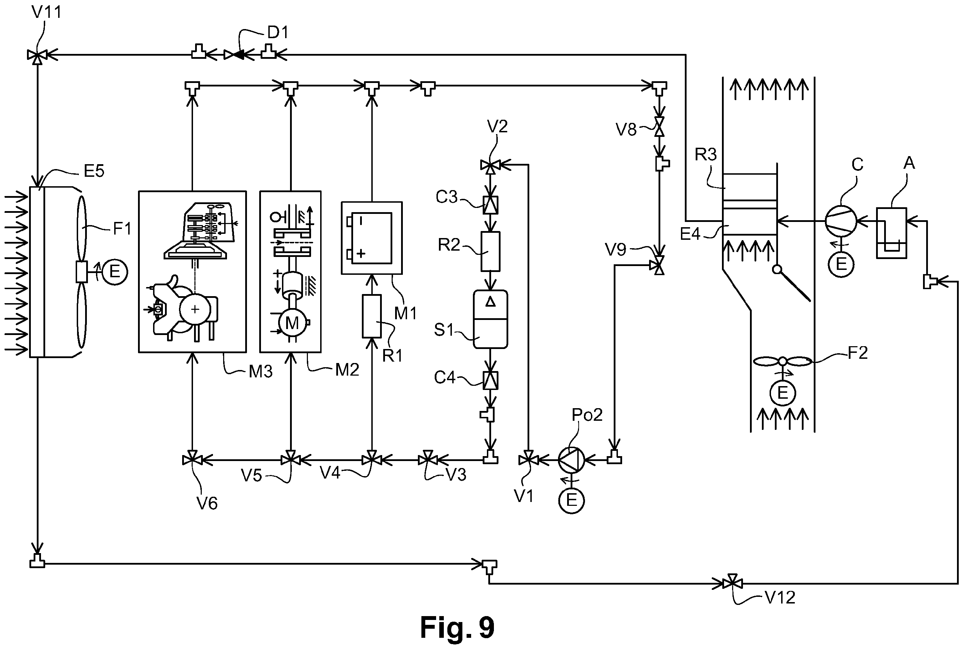

La figure 9 illustre un huitième mode de fonctionnement de l'installation, dans lequel :
- le fluide caloporteur issu de la pompe Po2 traverse successivement la vanne V1, la vanne V2, le clapet C3, les moyens de chauffage R2 (actifs ou non en fonction des besoins), le stockeur de calories S1, le clapet C4, la vanne V3, au moins l'un des moyens de chauffage et/ou de refroidissement R1 et M1 (les moyens R1 étant actifs ou non), M2, M3 par l'intermédiaire des vannes V4, V5, V6, la vanne V8 et la vanne V9 avant de traverser à nouveau la pompe Po2,
- le fluide frigorigène issu du compresseur C traverse successivement l'échangeur E4, le détendeur D1, la vanne V11, l'échangeur E5, la vanne V12 et l'accumulateur A avant de traverser à nouveau le compresseur C.

Dans le huitième mode, le stockeur de calories S1 est rechargé par les calories issues de l'échauffement du ou des différents organes du véhicule lors de leur utilisation. Comme précédemment, l'échangeur E4 permet de chauffer l'air destiné à l'habitacle. Les moyens de chauffage R3 peuvent être activés en complément, en fonction des besoins.

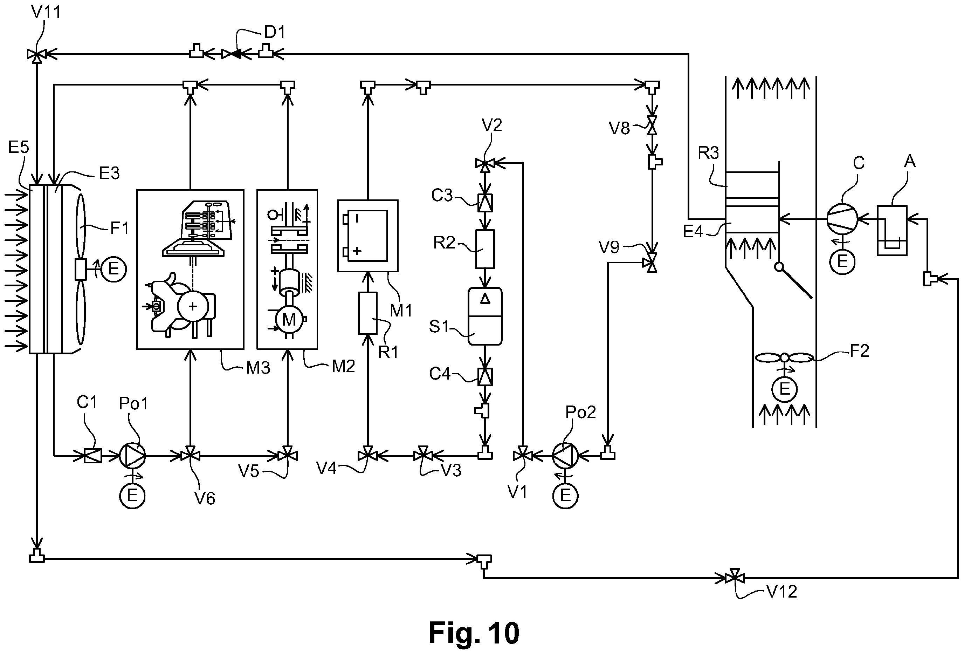

La figure 10 illustre un neuvième mode de fonctionnement de l'installation, dans lequel :
- le fluide caloporteur circule selon une première boucle dans laquelle le fluide caloporteur issu de la pompe Po2 traverse successivement la vanne V1, la vanne V2, le clapet C3, les moyens de chauffage R2 (actifs ou non en fonction des besoins), le stockeur de calories S1, le clapet C4, la vanne V3, la vanne V4, les moyens de chauffage R1 (actifs ou non), les moyens de chauffage et/ou de refroidissement M1, la vanne V8 et la vanne V9 avant de traverser à nouveau la pompe Po2, et selon une deuxième boucle dans laquelle le fluide caloporteur issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4, le détendeur D1, la vanne V11, l'échangeur E5, la vanne V12 et l'accumulateur A avant de traverser à nouveau le compresseur C.

Dans le neuvième mode, le stockeur de calories S1 est rechargé par les calories issues de l'échauffement du premier organe. Par ailleurs, le deuxième organe et/ou le troisième organe sont refroidis par les frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

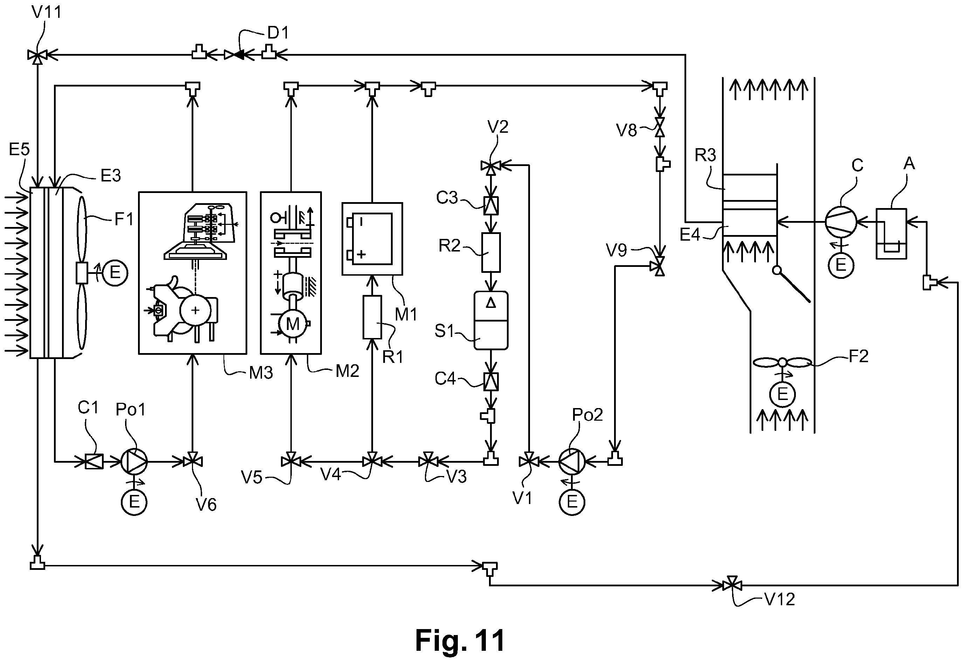

La figure 11 illustre un dixième mode de fonctionnement de l'installation, dans lequel :
- le fluide caloporteur circule selon une première boucle dans laquelle le fluide caloporteur issu de la pompe Po2 traverse successivement la vanne V1, la vanne V2, le clapet C3, les moyens de chauffage R2 (actifs ou non en fonction des besoins), le stockeur de calories S1, le clapet C4, la vanne V3, les moyens de chauffage et/ou de refroidissement R1 (actifs ou non) e M1 et/ou M2, par l'intermédiaire des vannes V4, V5, la vanne V8 et la vanne V9 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4, le détendeur D1, la vanne V11, l'échangeur E5, la vanne V12 et l'accumulateur A avant de traverser à nouveau le compresseur C.

Dans le dixième mode, le stockeur de calories S1 est rechargé par les calories issues de l'échauffement du premier organe et/ou du deuxième organe. Par ailleurs, le troisième organe est refroidi par les frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

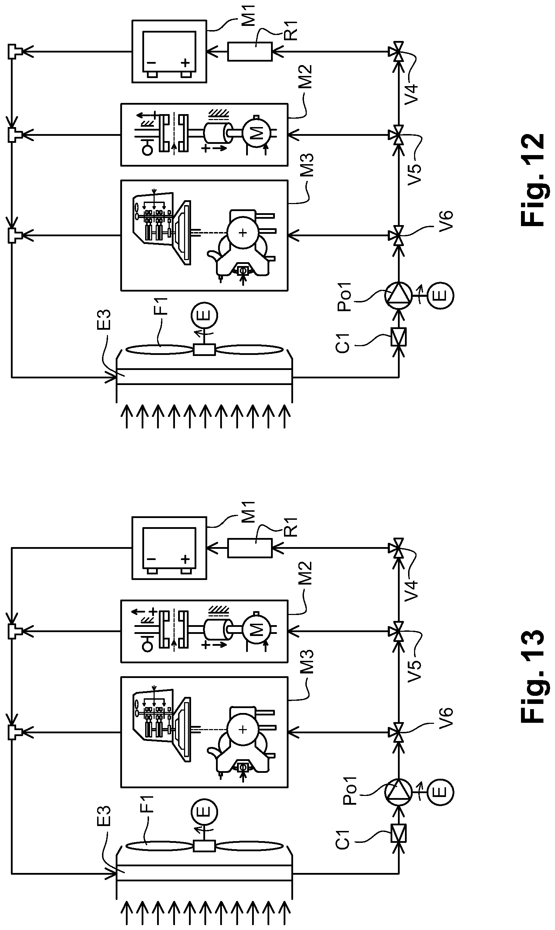

La figure 12 illustre un onzième mode de fonctionnement de l'installation, dans lequel le fluide caloporteur circule selon une boucle traversant successivement la pompe Po1, l'un ou plusieurs des moyens de chauffage et/ou de refroidissement R1 et M1 (les moyens R1 étant actifs ou non), M2, M3, par l'intermédiaire des vannes V4, V5, V6, l'échangeur E3 et le clapet C1 avant de traverser à nouveau la pompe Po1

Dans le onzième mode, le premier organe, le second organe et/ou le troisième organe sont refroidis par les frigories fournies par l'air extérieur, via l'échangeur E3.

Les modes 2 à 11 peuvent intervenir par exemple après une certaine durée d'utilisation du véhicule, lorsque les organes précités sont relativement chauds du fait de leur utilisation.

On décrira à présent en référence aux figures 13 à 19, différents modes de fonctionnement dans lesquels l'air extérieur au véhicule est tempéré, par exemple compris entre 15 et 25°C.

La figure 13 illustre un douzième mode de fonctionnement de l'installation, dans lequel le fluide caloporteur issu de la pompe Po1 traverse successivement les moyens de chauffage et/ou de refroidissement M1 et R1, et/ou M2 et/ou M3, par l'intermédiaire des vannes V4, V5, V6, l'échangeur E3 et le clapet C1 avant de traverser à nouveau la pompe Po1.

Dans le douzième mode, le premier organe, le deuxième organe et/ou le troisième organe sont refroidis par les frigories fournies par l'air extérieur, via l'échangeur E3.

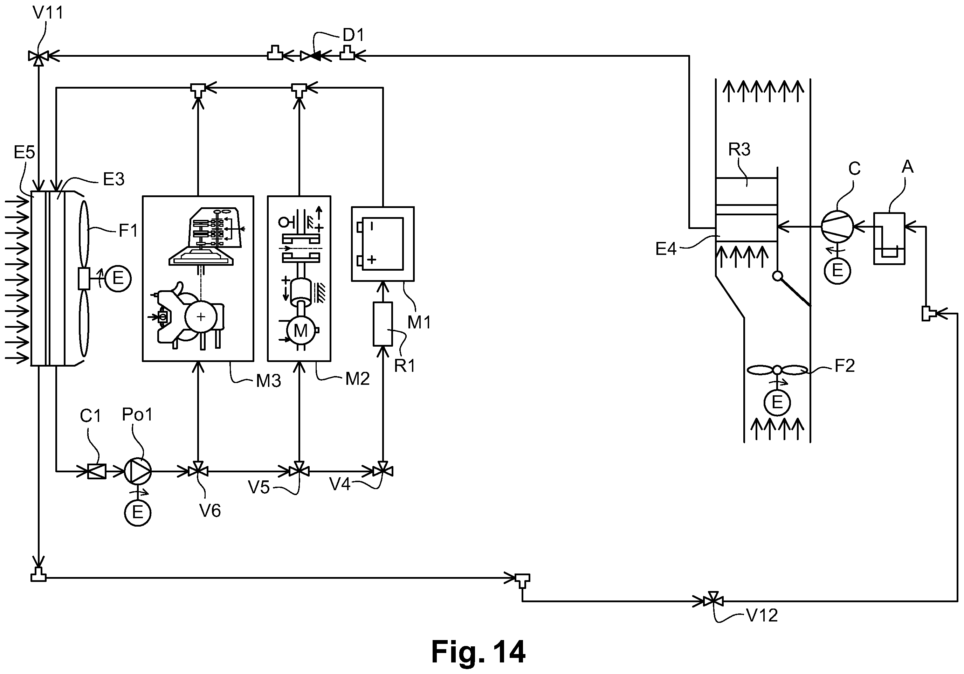

La figure 14 illustre un treizième mode de fonctionnement de l'installation, dans lequel :
- le fluide caloporteur issu de la pompe Po1 traverse successivement les moyens de chauffage et/ou de refroidissement M1 et R1, et/ou M2 et/ou M3, par l'intermédiaire des vannes V4, V5, V6, l'échangeur E3 et le clapet C1 avant de traverser à nouveau la pompe Po1,
- le fluide frigorigène issu du compresseur C traverse successivement l'échangeur E4, le détendeur D1, la vanne V11, l'échangeur E5, la vanne V12 et l'accumulateur A avant de traverser à nouveau le compresseur C.

Dans le treizième mode, le premier organe, le deuxième organe et/ou le troisième organe sont refroidis par les frigories fournies par l'air extérieur, via l'échangeur E3. Par ailleurs, l'échangeur E4 permet de chauffer l'air destiné à l'habitacle. Les moyens de chauffage R3 peuvent être activés en complément, en fonction des besoins.

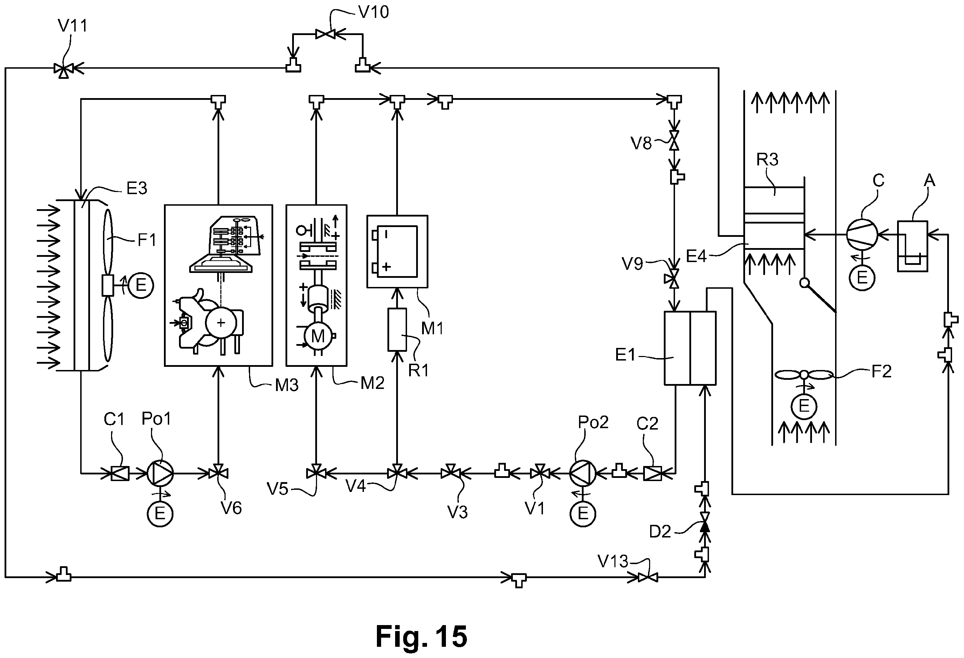

La figure 15 illustre un quatorzième mode de fonctionnement de l'installation, dans lequel :
- le fluide caloporteur circule selon une première boucle dans laquelle le fluide caloporteur issu de la pompe Po2 traverse successivement, la vanne V1, les moyens R1 ET M1 (les moyens R1 étant actifs ou non en fonction des besoins) et/ou les moyens M2, par l'intermédiaire des vannes V4, V5, la vanne V8, la vanne V9, l'échangeur E1 et le clapet C2 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4, la vanne V10, la vanne V11, la vanne V13, le détendeur D2, l'échangeur E1 et l'accumulateur A, avant de traverser à nouveau le compresseur C.

Dans le quatorzième mode, le premier organe et/ou le deuxième organe sont refroidis à l'aide des frigories fournies par l'échangeur E1. Le troisième organe est refroidi à l'aide des frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

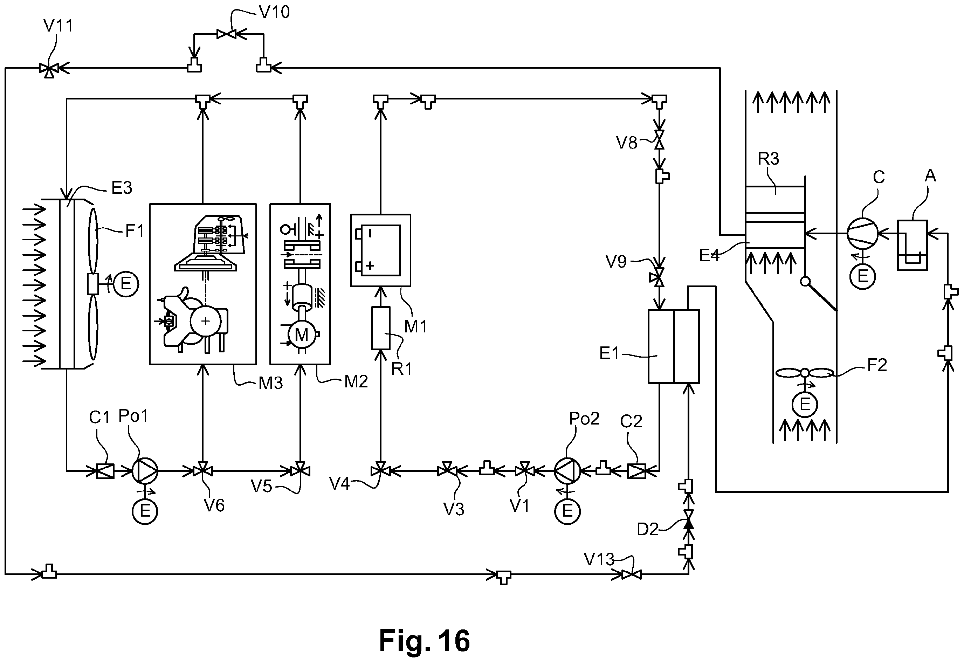

La figure 16 illustre un quinzième mode de fonctionnement de l'installation, dans lequel :
- le fluide caloporteur circule selon une première boucle dans laquelle le fluide issu de la pompe Po2 traverse successivement la vanne V1, la vanne V3, la vanne V4, les moyens de chauffage R1 (actifs ou non en fonction des besoins), les moyens de chauffage et/ou de refroidissement M1, la vanne V8, la vanne V9, l'échangeur E1 et le clapet C2, avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4, la vanne V10, la vanne V11, la vanne V13, le détendeur D2, l'échangeur E1 et l'accumulateur A, avant de traverser à nouveau le compresseur C.

Dans le quinzième mode, le premier organe est refroidi à l'aide des frigories fournies par l'échangeur E1. Le deuxième organe et/ou troisième organe sont refroidis à l'aide des frigories fournies par l'air extérieur, via l'échangeur E3. Comme précédemment, l'échangeur E4 permet de chauffer l'air destiné à l'habitacle. Les moyens de chauffage R3 peuvent être activés en complément, en fonction des besoins.

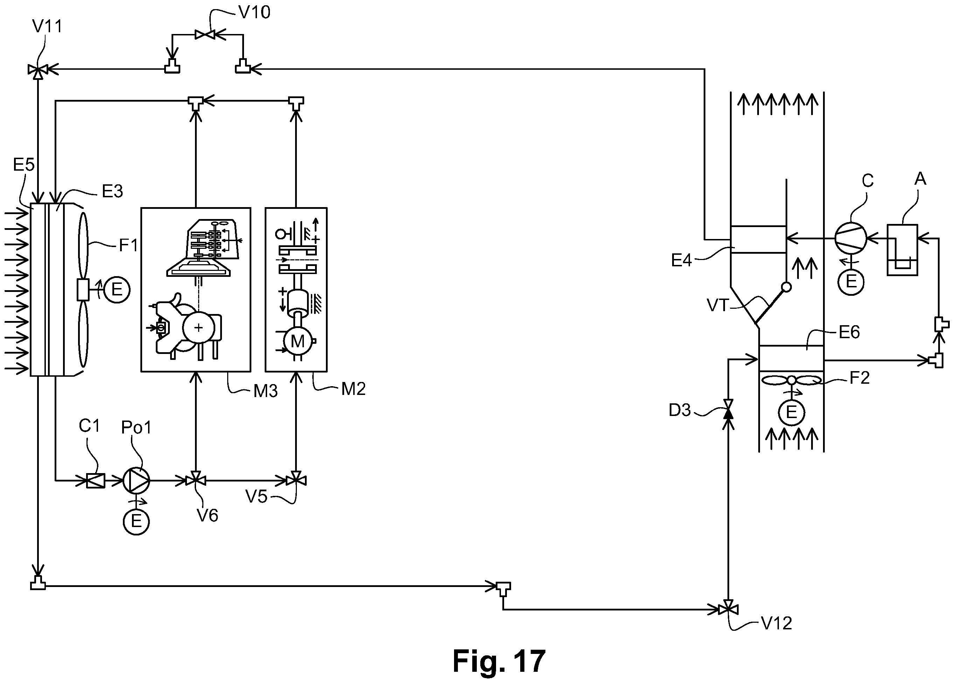

La figure 17 illustre un seizième mode de fonctionnement de l'installation, dans lequel :
- le fluide caloporteur issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, la vanne V12, le détendeur D3, l'échangeur E6 et l'accumulateur A avant de traverser à nouveau le compresseur C.

Dans le seizième mode, le deuxième organe et/ou le troisième organe sont refroidis à l'aide des frigories fournies par l'air extérieur, via l'échangeur E3. Par ailleurs, l'échangeur E6, formant un évaporateur, permet de refroidir l'air destiné à l'habitacle. On notera que, dans ce mode de fonctionnement, l'air traversant le conduit 3 est amené par le volet VT vers le canal 3d, de manière à dévier l'air correspondant de l'échangeur E4, de façon à ce que celui-ci ne joue aucun rôle actif, bien qu'il soit traversé par le fluide frigorigène.

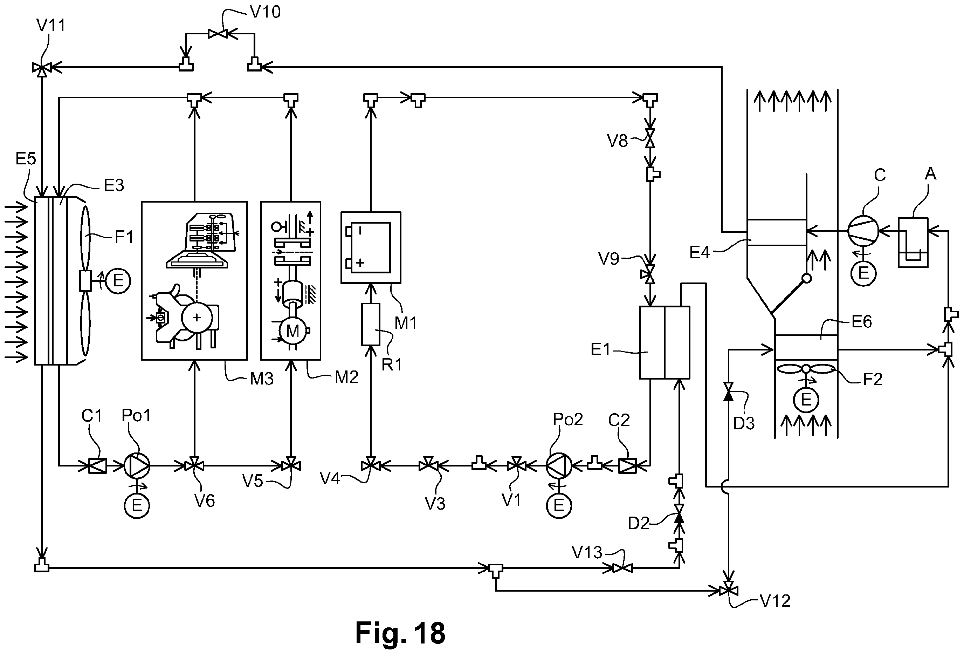

La figure 18 illustre un dix-septième mode de fonctionnement de l'installation, dans lequel :
- le fluide caloporteur circule selon une première boucle dans laquelle le fluide issu de la pompe Po2 traverse successivement la vanne V1, la vanne V3, la vanne V4, les moyens de chauffage R1 (actifs ou non en fonction des besoins), les moyens de chauffage et/ou de refroidissement M1, la vanne V8, la vanne V9, l'échangeur E1 et le clapet C2, avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le dix-septième mode, le premier organe est refroidi à l'aide des frigories fournies par l'échangeur E1. Le deuxième organe et/ou le troisième organe sont refroidis à l'aide des frigories fournies par l'air extérieur, via l'échangeur E3. Comme précédemment, l'échangeur E6 permet de refroidir l'air destiné à l'habitacle.

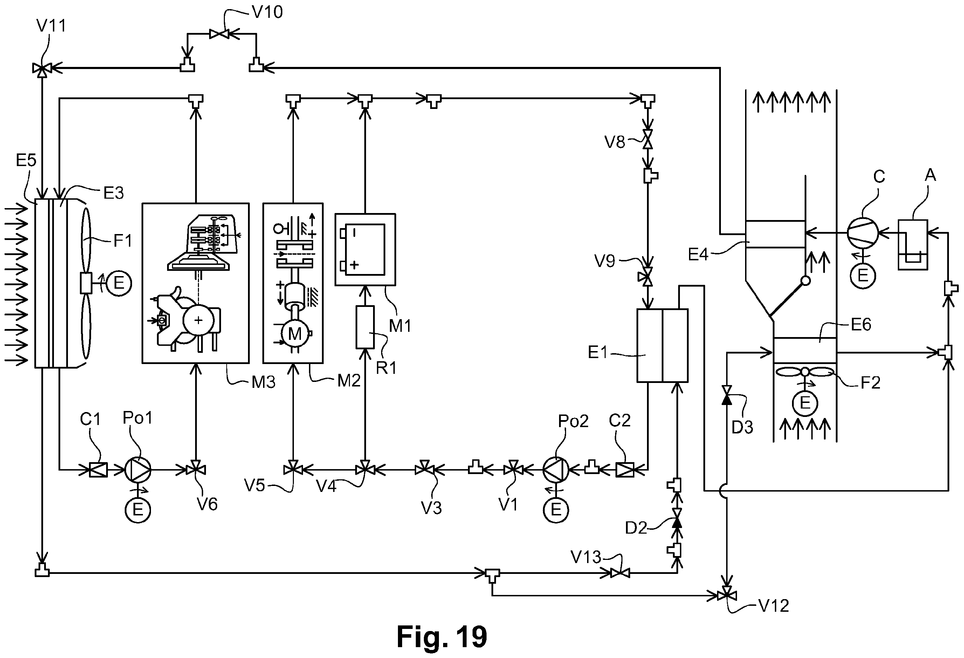

La figure 19 illustre un dix-huitième mode de fonctionnement de l'installation, dans lequel :
- le fluide caloporteur circule selon une première boucle dans laquelle le fluide caloporteur issu de la pompe Po2 traverse successivement, la vanne V1, les moyens R1 et M1 (les moyens R1 étant actifs ou non en fonction des besoins) et/ou les moyens M2, par l'intermédiaire des vannes V4, V5, la vanne V8, la vanne V9, l'échangeur E1 et le clapet C2 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le dix- huitième mode, le premier organe et/ou le deuxième organe sont refroidis à l'aide des frigories fournies par l'échangeur E1. Le troisième organe est refroidi à l'aide des frigories fournies par l'air extérieur, via l'échangeur E3. Comme précédemment, l'échangeur E6 permet de refroidir l'air destiné à l'habitacle.

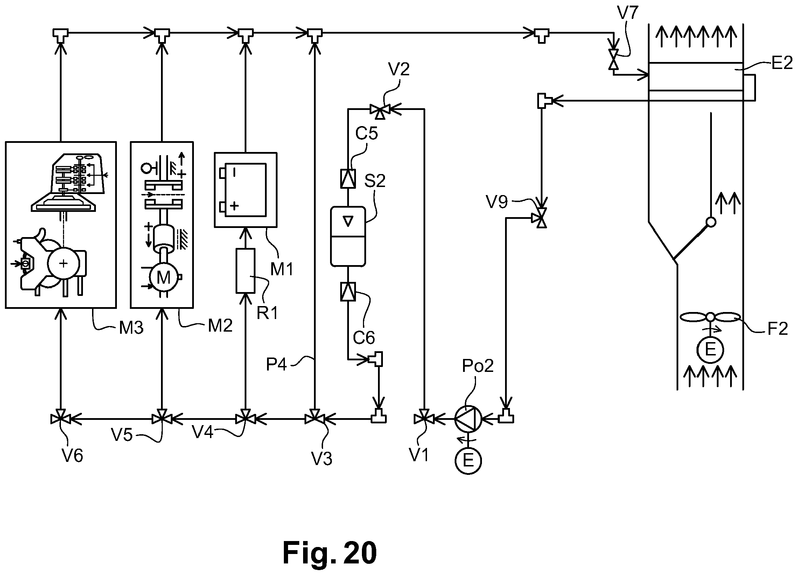

On décrira à présent en référence aux figures 20 à 26, différents modes de fonctionnement dans lesquels l'air extérieur au véhicule est relativement chaud, par exemple supérieur à 25°C.

La figure 20 illustre un dix-neuvième mode de fonctionnement de l'installation, dans lequel le fluide caloporteur issu de la pompe Po2 traverse successivement la vanne V1, la vanne V2, le clapet C5, le stockeur de frigories S2, le clapet C6, le fluide caloporteur pouvant ensuite traverser au moins l'un des moyens de chauffage et/ou de refroidissement R1 et M1 (les moyens R1 étant actifs ou non), M2, M3 par l'intermédiaire des vannes V4, V5, V6, et/ou être dérivé desdits moyens R1, M1, M2, M3 en tout ou partie au travers de la vanne V3 et de la conduite P4, le fluide caloporteur circulant ensuite au travers de la vanne V8 et de la vanne V9 avant de traverser à nouveau la pompe Po2.

Dans le dix-neuvième mode, les frigories peuvent être transférées du stockeur de frigories S2 vers le ou les organes du véhicule à refroidir, tels par exemple que la batterie, le ou les moteurs électriques et/ou les onduleurs correspondants, et/ou le moteur thermique. Les frigories issues du stockeur de frigories sont également transférées au deuxième échangeur, de façon à refroidir rapidement l'habitacle du véhicule et assurer le confort des utilisateurs.

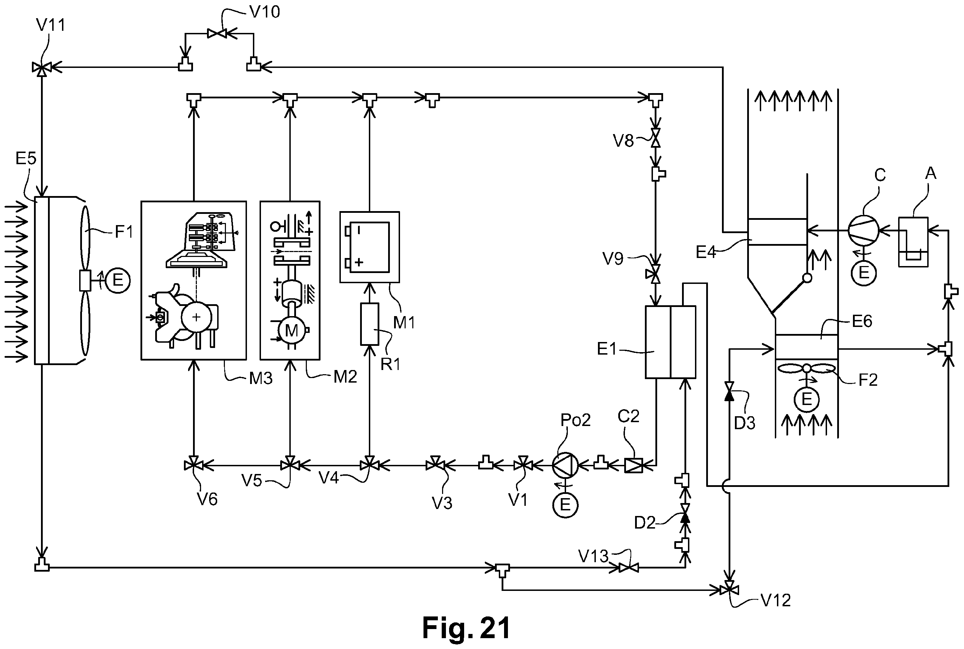

La figure 21 illustre un vingtième mode de fonctionnement de l'installation, dans lequel :
- le fluide caloporteur issu de la pompe Po2 traverse successivement la vanne V1, la vanne V3, au moins l'un des moyens de chauffage et/ou de refroidissement R1 et M1 (les moyens R1 étant actifs ou non), M2, M3 par l'intermédiaire des vannes V4, V5, V6, la vanne V8, la vanne V9, l'échangeur E1 et le clapet C2, avant de traverser à nouveau la pompe Po2,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le vingtième mode, le premier organe, le deuxième organe et/ou le troisième organe sont refroidis à l'aide des frigories fournies par l'échangeur E1. Par ailleurs, l'échangeur E6 permet de refroidir l'air destiné à l'habitacle.

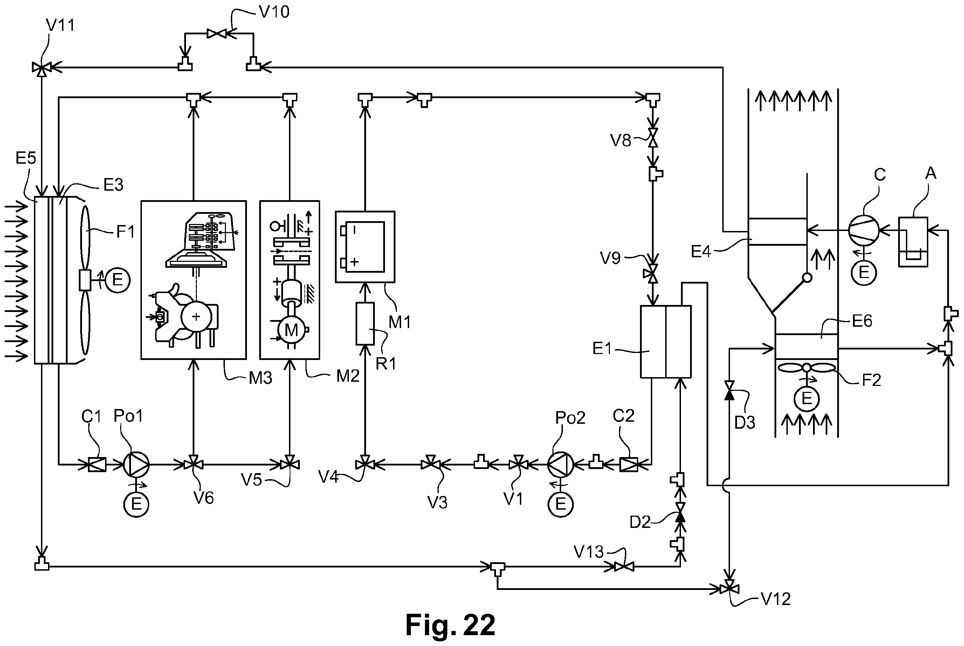

La figure 22 illustre un vingt-et-unième mode de fonctionnement de l'installation, dans lequel :
- le fluide caloporteur circule selon une première boucle dans laquelle le fluide issu de la pompe Po2 traverse successivement la vanne V1, la vanne V3, la vanne V4, les moyens de chauffage R1 (actifs ou non en fonction des besoins), les moyens de chauffage et/ou de refroidissement M1, la vanne V8, la vanne V9, l'échangeur E1 et le clapet C2, avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le vingt-et-unième mode, le premier organe est refroidi à l'aide des frigories fournies par l'échangeur E1. Le deuxième organe et/ou le troisième organe sont refroidis à l'aide des frigories fournies par l'air extérieur, via l'échangeur E3. Comme précédemment, l'échangeur E6 permet de refroidir l'air destiné à l'habitacle.

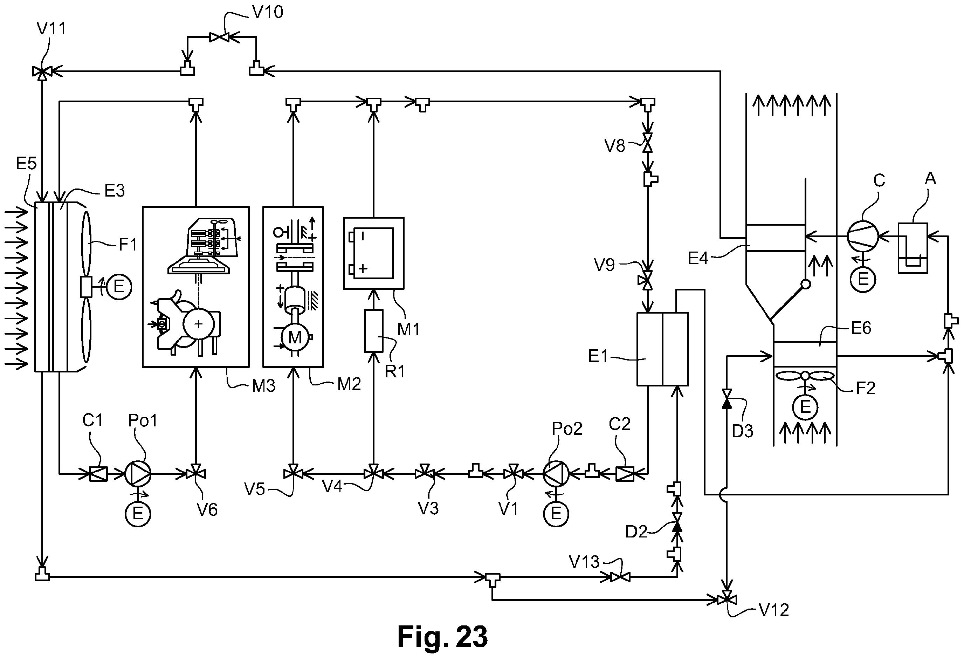

La figure 23 illustre un vingt-deuxième mode de fonctionnement de l'installation, dans lequel :
- le fluide caloporteur circule selon une première boucle dans laquelle le fluide caloporteur issu de la pompe Po2 traverse successivement, la vanne V1, les moyens R1 et M1 (les moyens R1 étant actifs ou non en fonction des besoins) et/ou les moyens M2, par l'intermédiaire des vannes V4, V5, la vanne V8, la vanne V9, l'échangeur E1 et le clapet C2 avant de traverser à nouveau la pompe Po2, et selon une deuxième boucle dans laquelle le fluide caloporteur issu de la pompe Po1 traverse successivement la vanne V6, les moyens de chauffage et/ou de refroidissement M3, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le vingt-deuxième mode, le premier organe et/ou le deuxième organe sont refroidis à l'aide des frigories fournies par l'échangeur E1. Le troisième organe est refroidi à l'aide des frigories fournies par l'air extérieur, via l'échangeur E3. Comme précédemment, l'échangeur E6 permet de refroidir l'air destiné à l'habitacle.

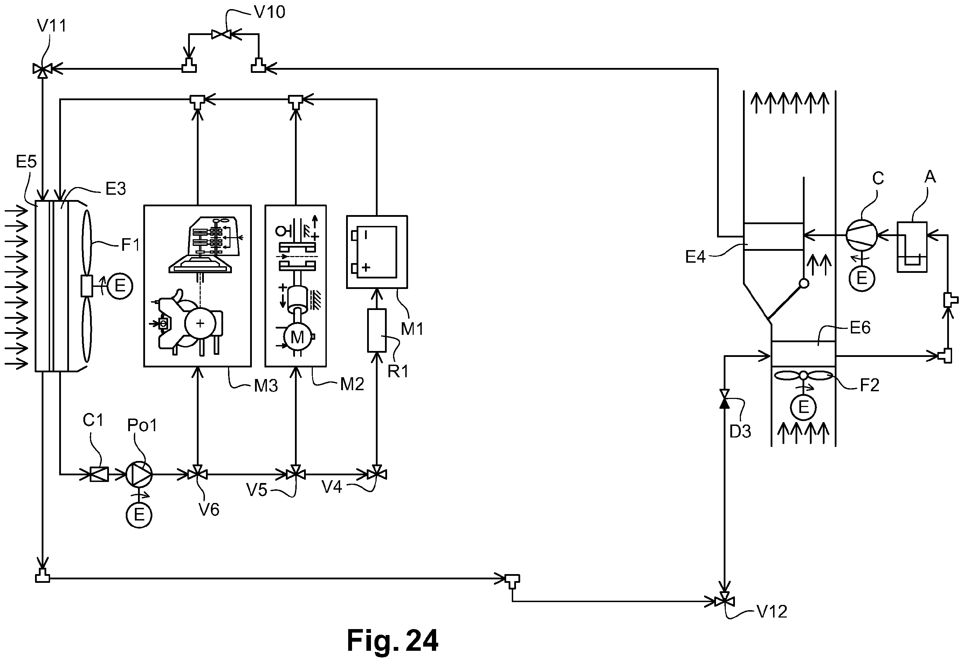

La figure 24 illustre un vingt-troisième mode de fonctionnement de l'installation, dans lequel :
- le fluide caloporteur issu de la pompe Po1 traverse successivement les moyens de chauffage et/ou de refroidissement M1 et R1, et/ou M2 et/ou M3, par l'intermédiaire des vannes V4, V5, V6, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, la vanne V12, le détendeur D3, l'échangeur E6 et l'accumulateur A avant de traverser à nouveau le compresseur C.

Dans le vingt-troisième mode, le premier organe, le deuxième organe et/ou le troisième organe sont refroidis à l'aide des frigories fournies par l'air extérieur, via l'échangeur E3. Comme précédemment, l'échangeur E6 permet de refroidir l'air destiné à l'habitacle.

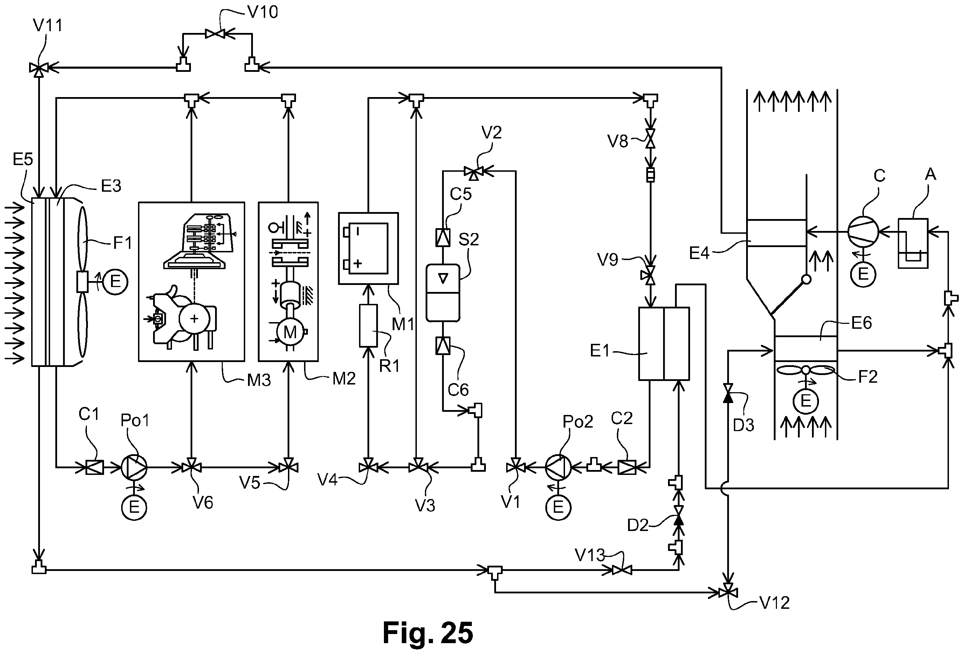

La figure 25 illustre un vingt-quatrième mode de fonctionnement de l'installation, dans lequel :
- le fluide caloporteur circule selon une première boucle dans laquelle le fluide issu de la pompe Po2 traverse successivement la vanne V1, le clapet C5, le stockeur de frigories S2,le clapet C6, la vanne V3, une partie au moins du fluide caloporteur circulant ensuite optionnellement au travers des moyens R1 et M1, l'ensemble du fluide caloporteur de la première boucle traversant ensuite la vanne V8, la vanne V9, l'échangeur E1 et le clapet C2 avant de traverser à nouveau la pompe Po2, et selon une deuxième boucle dans laquelle le fluide issu de la pompe Po1 traverse successivement les moyens de chauffage et/ou de refroidissement M2 et/ou M3, par l'intermédiaire des vannes V5, V6, l'échangeur E3 et le clapet C1 avant de traverser à nouveau la pompe Po1,
- le fluide frigorigène issu du compresseur C traverse successivement l'échangeur E4 (qui ne joue aucun rôle actif), la vanne V10, la vanne V11, l'échangeur E5, une première partie du fluide frigorigène traversant ensuite la vanne V13, le détendeur D2, l'échangeur E1 et l'accumulateur A avant de traverser à nouveau le compresseur C, tandis qu'une deuxième partie du fluide frigorigène est dérivée en amont de l'accumulateur A, au travers de la vanne V12, du détendeur D3 et de l'échangeur E6.

Dans le vingt-quatrième mode, le stockeur de frigories est complètement rechargé à l'aide des frigories fournies par l'échangeur E1, une partie de ces frigories pouvant être utilisée pour refroidir le premier organe. Le deuxième organe et/ou le troisième organe sont refroidis à l'aide des frigories fournies par l'air extérieur, via l'échangeur E3. Comme précédemment, l'échangeur E6 permet de refroidir l'air destiné à l'habitacle.

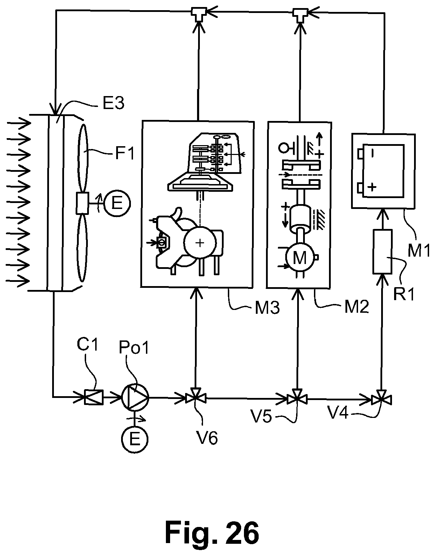

La figure 26 illustre un vingt-cinquième mode de fonctionnement de l'installation, dans lequel le fluide caloporteur circule selon une boucle traversant successivement la pompe Po1, l'un ou plusieurs des moyens de chauffage et/ou de refroidissement R1 et M1 (les moyens R1 étant actifs ou non), M2, M3, par l'intermédiaire des vannes V4, V5, V6, l'échangeur E3 et le clapet C1 avant de traverser à nouveau la pompe Po1

Dans le vingt-cinquième mode, le premier organe, le second organe et/ou le troisième organe sont refroidis par les frigories fournies par l'air extérieur, via l'échangeur E3.

L'installation selon l'invention permet ainsi d'assurer de façon simple et fiable un grand nombre de modes de fonctionnement à l'aide d'un nombre limité d'éléments. Le coût et le poids d'une telle installation sont donc également limités.

## Revendications

1. Installation de conditionnement thermique d'un habitacle et/ou d'au moins un organe d'un véhicule automobile, comportant :
- un premier circuit (1) de circulation d'un fluide caloporteur,
- un deuxième circuit (2) de circulation d'un fluide frigorigène, apte à former un circuit de type pompe à chaleur,
le circuit de fluide caloporteur (1) comportant des moyens de chauffage et/ou de refroidissement (M1, M2, M3) destinés à chauffer et/ou refroidir au moins un organe d'un véhicule automobile, tel par exemple qu'une batterie, qu'un moteur électrique ou qu'un moteur thermique, des moyens de stockage (S1, S2) de calories et/ou de frigories comportant un matériau à changement de phase, un premier échangeur de chaleur (E1) formant un évaporateur et apte à échanger de la chaleur avec le circuit de fluide frigorigène, et des moyens de circulation du fluide caloporteur, aptes à puiser les frigories et/ou calories issues des moyens de stockage (S1, S2) ou du premier échangeur (E1), de façon à les transférer vers les moyens de chauffage et/ou de refroidissement (M1, M2, M3),
le circuit de fluide caloporteur (1) comportant un deuxième échangeur de chaleur (E2) apte à chauffer ou à refroidir de l'air destiné à déboucher dans l'habitacle du véhicule, les moyens de circulation du fluide caloporteur étant aptes à puiser les frigories et/ou calories issues des moyens de stockage (S1, S2) ou du premier échangeur (E1), de façon à les transférer vers le deuxième échangeur (E2),
le circuit de fluide frigorigène comportant un sixième échangeur de chaleur (E6) apte à former un évaporateur et apte à échanger de la chaleur avec de l'air destiné à déboucher dans l'habitacle du véhicule.
**caractérisé en ce que** le circuit de fluide frigorigène comporte un quatrième échangeur de chaleur (E4) apte à former un condenseur et apte à échanger de la chaleur avec de l'air destiné à déboucher dans l'habitacle du véhicule.

2. Installation selon la revendication 1, **caractérisée en ce que** les moyens de stockage comportent au moins un stockeur de calories (S1) et au moins un stockeur de frigorie (S2).

3. Installation selon la revendication 1 ou 2, **caractérisée en ce que** le circuit de fluide caloporteur comporte un troisième échangeur de chaleur (E3) apte à échanger de la chaleur avec de l'air extérieur, les moyens de circulation du fluide caloporteur étant aptes à transférer des frigories issues du troisième échangeur de chaleur (E3) vers l'un au moins des organes du véhicule, par exemple vers le moteur thermique ou le moteur électrique et/ou la batterie.

4. Installation selon l'une des revendications 1 à 3, **caractérisée en ce que** le circuit de fluide frigorigène comporte un cinquième échangeur de chaleur (E5) apte à former un évaporateur et/ou un condenseur et apte à échanger de la chaleur avec de l'air extérieur au véhicule.

5. Installation selon l'une des revendications 1 à 4, **caractérisée en ce que** le circuit de fluide caloporteur comporte des premiers moyens de chauffage (R1), tels par exemple qu'une première résistante électrique, apte à chauffer le fluide caloporteur en amont de l'un des organes du véhicule.

6. Installation selon l'une des revendications 1 à 5 et selon la revendication 2, **caractérisée en ce que** le circuit de fluide caloporteur comporte des deuxièmes moyens de chauffage (R2), tels par exemple qu'une deuxième résistante électrique, apte à chauffer le fluide caloporteur destiné à circuler dans le stockeur de calories.

7. Installation selon l'une des revendications 1 à 6, **caractérisée en ce qu'**elle comporte des troisièmes moyens de chauffage (R3), tels par exemple qu'une troisième résistance électrique, aptes à chauffer l'air destiné à déboucher dans l'habitacle du véhicule.

8. Installation selon l'une des revendications 1 à 7, **caractérisée en ce que** le circuit de fluide caloporteur comporte des moyens de dérivation (V3, P4) aptes à dériver tout ou partie du fluide caloporteur hors desdits moyens de chauffage et/ou de refroidissement (M1, M2, M3).

9. Installation selon les revendications 1 à 8, **caractérisée en ce qu'**elle comporte des moyens de circulation du fluide caloporteur et des moyens de circulation du fluide frigorigène conçus pour fonctionner selon l'un au moins des modes suivants :
- un mode dans lequel le fluide caloporteur circule selon une boucle comportant au moins successivement le stockeur de calories (S1), optionnellement les moyens de chauffage et/ou de refroidissement (M1, M2, M3), et le deuxième échangeur (E2),
- un mode dans lequel le fluide caloporteur circule selon une boucle comportant au moins successivement les moyens de chauffage et/ou de refroidissement (M1, M2, M3) et le premier échangeur (E1), le fluide frigorigène circulant selon une boucle comportant au moins successivement un compresseur (C), le quatrième échangeur (E4), un premier détendeur (D1), le cinquième échangeur (E5), une première partie du fluide frigorigène traversant ensuite un deuxième détendeur (D2) et le premier échangeur (E1) avant de revenir au compresseur (C), tandis qu'une deuxième partie du fluide frigorigène est dérivée vers le compresseur (C),
- un mode dans lequel le fluide caloporteur circule selon une première boucle comportant au moins successivement les moyens de chauffage et/ou de refroidissement (M1) d'un premier organe, tel qu'une batterie, et le premier échangeur (E1), et optionnellement selon une deuxième boucle comportant au moins successivement des moyens de chauffage et/ou de refroidissement (M2) d'un deuxième organe, tel qu'un moteur électrique, et/ou des moyens de chauffage et/ou de refroidissement (M3) d'un troisième organe, tel qu'un moteur thermique, et le troisième échangeur (E3), le fluide frigorigène circulant selon une boucle comportant au moins successivement le compresseur (C), le quatrième échangeur (E4), le premier détendeur (D1), le cinquième échangeur (E5), une première partie du fluide frigorigène traversant ensuite le premier échangeur (E1) avant de revenir au compresseur (C), tandis qu'une deuxième partie du fluide frigorigène est dérivée vers le compresseur (C),
- un mode dans lequel le fluide caloporteur circule selon une première boucle comportant au moins successivement les moyens de chauffage et/ou de refroidissement (M1, M2) du premier organe et/ou du deuxième organe, et le premier échangeur (E1), et optionnellement selon une deuxième boucle comportant au moins successivement les moyens de chauffage et/ou de refroidissement (M3) du troisième organe, et le troisième échangeur (E3), le fluide frigorigène circulant selon une boucle comportant au moins successivement le compresseur (C), le quatrième échangeur (E4), le premier détendeur (D1), le cinquième échangeur (E5), une première partie du fluide frigorigène traversant ensuite le premier échangeur (E1) avant de revenir au compresseur (C), tandis qu'une deuxième partie du fluide frigorigène est dérivée vers le compresseur (C),
- un mode dans lequel le fluide caloporteur circule selon une boucle comportant au moins successivement les moyens de chauffage et/ou de refroidissement (M1, M2, M3) et le premier échangeur (E1), le fluide frigorigène circulant selon une boucle comportant au moins successivement le compresseur (C), le quatrième échangeur (E4), le deuxième détendeur (D2) et le premier échangeur (E1),
- un mode dans lequel le fluide caloporteur circule selon une première boucle comportant au moins successivement les moyens de chauffage et/ou de refroidissement (M1) du premier organe, et le premier échangeur (E1), et optionnellement selon une deuxième boucle comportant au moins successivement les moyens de chauffage et/ou de refroidissement (M2, M3) du deuxième organe et/ou du troisième organe, et le troisième échangeur (E3), le fluide frigorigène circulant selon une boucle comportant au moins successivement le compresseur (C), le quatrième échangeur (E4), le deuxième détendeur (D2) et le premier échangeur (E1),
- un mode dans lequel le fluide caloporteur circule selon une première boucle comportant au moins successivement les moyens de chauffage et/ou de refroidissement (M1, M2) du premier organe et/ou du deuxième organe, et le premier échangeur (E1), et optionnellement selon une deuxième boucle comportant au moins successivement les moyens de chauffage et/ou de refroidissement (M3) du troisième organe, et le troisième échangeur (E3), le fluide frigorigène circulant selon une boucle comportant au moins successivement le compresseur (C), le quatrième échangeur (E4), le deuxième détendeur (D2) et le premier échangeur (E1),
- un mode dans lequel le fluide caloporteur circule selon une boucle comportant au moins successivement le stockeur de calories (S1) et les moyens de chauffage et/ou de refroidissement (M1, M2, M3), le fluide frigorigène circulant selon une boucle comportant au moins successivement le compresseur (C), le quatrième échangeur (E4), le premier détendeur (D1), et le cinquième échangeur (E5),
- un mode dans lequel le fluide caloporteur circule selon une première boucle comportant au moins successivement le stockeur de calories (S1) et les moyens de chauffage et/ou de refroidissement (M1) du premier organe, et optionnellement selon une deuxième boucle comportant au moins successivement les moyens de chauffage et/ou de refroidissement (M2, M3) du deuxième organe et/ou du troisième organe, et le troisième échangeur (E3), le fluide frigorigène circulant selon une boucle comportant au moins successivement le compresseur (C), le quatrième échangeur (E4), le premier détendeur (D1) et le cinquième échangeur (E5),
- un mode dans lequel le fluide caloporteur circule selon une première boucle comportant au moins successivement le stockeur de calories (S1) et les moyens de chauffage et/ou de refroidissement (M1, M2) du premier organe et/ou du deuxième organe, et optionnellement selon une deuxième boucle comportant au moins successivement les moyens de chauffage et/ou de refroidissement (M3) du troisième organe, et le troisième échangeur (E3), le fluide frigorigène circulant selon une boucle comportant au moins successivement le compresseur (C), le quatrième échangeur (E4), le premier détendeur (D1) et le cinquième échangeur (E5),
- un mode dans lequel le fluide caloporteur circule selon une boucle comportant au moins successivement les moyens de chauffage et/ou de refroidissement (M1, M2, M3), et le troisième échangeur (E3),
- un mode dans lequel le fluide caloporteur circule selon une boucle comportant au moins successivement les moyens de chauffage et/ou de refroidissement (M1, M2, M3), et le troisième échangeur (E3), le fluide frigorigène circulant selon une boucle comportant au moins successivement le compresseur (C), le quatrième échangeur (E4), le premier détendeur (D1), et le cinquième échangeur (E5),
- un mode dans lequel le fluide caloporteur circule selon une boucle comportant au moins successivement les moyens de chauffage et/ou de refroidissement (M2, M3) du deuxième organe et/ou du troisième organe, et le troisième échangeur (E3), le fluide frigorigène circulant selon une boucle comportant au moins successivement le compresseur (C), le cinquième échangeur (E5), un troisième détendeur (D3) et le sixième échangeur (E6),
- un mode dans lequel le fluide caloporteur circule selon une première boucle comportant au moins successivement les moyens de chauffage et/ou de refroidissement (M1) du premier organe, et le premier échangeur (E1), et optionnellement selon une deuxième boucle comportant au moins successivement les moyens de chauffage et/ou de refroidissement (M2, M3) du deuxième organe et/ou du troisième organe, et le troisième échangeur (E3), le fluide frigorigène circulant selon une boucle comportant au moins successivement le compresseur (C), le cinquième échangeur (E5), une première partie du fluide frigorigène traversant ensuite le deuxième détendeur (D2) et le premier échangeur (E1) avant de revenir au compresseur (C), tandis qu'une deuxième partie du fluide frigorigène traverse ensuite le troisième détendeur (D3) et le sixième échangeur (E6) avant de revenir au compresseur (C),
- un mode dans lequel le fluide caloporteur circule selon une première boucle comportant au moins successivement les moyens de chauffage et/ou de refroidissement (M1, M2) du premier organe et/ou du deuxième organe, et le premier échangeur (E1), et optionnellement selon une deuxième boucle comportant au moins successivement les moyens de chauffage et/ou de refroidissement (M3) du troisième organe, et le troisième échangeur (E3), le fluide frigorigène circulant selon une boucle comportant au moins successivement le compresseur (C), le cinquième échangeur (E5), une première partie du fluide frigorigène traversant ensuite le deuxième détendeur (D2) et le premier échangeur (E1) avant de revenir au compresseur (C), tandis qu'une deuxième partie du fluide frigorigène traverse ensuite le troisième détendeur (D3) et le sixième échangeur (E6) avant de revenir au compresseur (C),
- un mode dans lequel le fluide caloporteur circule selon une boucle comportant au moins successivement le stockeur de frigories (S2), optionnellement les moyens de chauffage et/ou de refroidissement (M1, M2, M3), et le deuxième échangeur (E2),
- un mode dans lequel le fluide caloporteur circule selon une boucle comportant au moins successivement les moyens de chauffage et/ou de refroidissement (M1, M2, M3), et le premier échangeur (E1), le fluide frigorigène circulant selon une boucle comportant au moins successivement le compresseur (C), le cinquième échangeur (E5), une première partie du fluide frigorigène traversant ensuite le deuxième détendeur (D2) et le premier échangeur (E1) avant de revenir au compresseur (C), tandis qu'une deuxième partie du fluide frigorigène traverse ensuite le troisième détendeur (D3) et le sixième échangeur (E6) avant de revenir au compresseur (C),
- un mode dans lequel le fluide caloporteur circule selon une boucle comportant au moins successivement les moyens de chauffage et/ou de refroidissement (M1, M2, M3), et le troisième échangeur (E3), le fluide frigorigène circulant selon une boucle comportant au moins successivement le compresseur (C), le cinquième échangeur (E5), le troisième détendeur (D3) et le sixième échangeur (E6),
- un mode dans lequel le fluide caloporteur circule selon une première boucle comportant au moins successivement le stockeur de frigories (S2), optionnellement les moyens de chauffage et/ou de refroidissement (M1) du premier organe, et le premier échangeur (E1), et optionnellement selon une deuxième boucle comportant au moins successivement les moyens de chauffage et/ou de refroidissement (M2, M3) du deuxième organe et/ou du troisième organe, et le troisième échangeur (E3), le fluide frigorigène circulant selon une boucle comportant au moins successivement le compresseur (C), le cinquième échangeur (E5), une première partie du fluide frigorigène traversant ensuite le deuxième détendeur (D2) et le premier échangeur (E1) avant de revenir au compresseur (C), tandis qu'une deuxième partie du fluide frigorigène traverse ensuite le troisième détendeur (D3) et le sixième échangeur (E6) avant de revenir au compresseur (C).

## Patentansprüche

1. Anlage zur thermischen Konditionierung eines Fahrgastraums und/oder zumindest einer Einrichtung eines Kraftfahrzeugs, enthaltend:
- einen ersten Kreislauf (1) zur Zirkulation eines Wärmeträgerfluids,
- einen zweiten Kreislauf (2) zur Zirkulation eines Kältemittels, der geeignet ist, einen Kreislauf vom Typ Wärmepumpe zu bilden,
wobei der Wärmeträgerfluidkreislauf (1) Heiz- und/oder Kühlmittel (M1 , M2, M3) aufweist, die dazu bestimmt sind, zumindest eine Einrichtung eines Kraftfahrzeugs, wie beispielsweise eine Batterie, einen Elektromotor oder einen Verbrennungsmotor, zu heizen und/oder zu kühlen, sowie Speichermittel (S1, S2) zum Speichern von Wärme und/oder Kälte mit einem Phasenwechselmaterial, einen ersten Wärmetauscher (E1), der einen Verdampfer bildet und geeignet ist, Wärme mit dem Kältemittelkreislauf auszutauschen, und Mittel zur Zirkulation des Wärmeträgerfluids, die geeignet sind, die aus den Speichermitteln (S1 , S2) oder dem ersten Wärmetauscher (E1) stammenden Kälte und/oder Wärme zu entnehmen, um sie zu den Heiz- und/oder Kühlmitteln (M1, M2, M3) zu übertragen,
wobei der Wärmeträgerfluidkreislauf (1) einen zweiten Wärmetauscher (E2) aufweist, der geeignet ist, Luft zu erwärmen oder zu kühlen, die in den Fahrgastraum des Fahrzeugs münden soll, wobei die Mittel zur Zirkulation des Wärmeträgerfluids geeignet sind, die aus den Speichermitteln (S1, S2) oder dem ersten Wärmetauscher (E1) stammende Kälte und/oder Wärme zu entnehmen, um sie zum zweiten Wärmetauscher (E2) zu übertragen,
wobei der Kältemittelkreislauf einen sechsten Wärmetauscher (E6) aufweist, der geeignet ist, einen Verdampfer zu bilden und Wärme mit der Luft auszutauschen, die in den Fahrgastraum des Fahrzeugs münden soll,
**dadurch gekennzeichnet, dass** der Kältemittelkreislauf einen vierten Wärmetauscher (E4) aufweist, der geeignet ist, einen Kondensator zu bilden und Wärme mit der Luft auszutauschen, die in den Fahrgastraum des Fahrzeugs münden soll.

2. Anlage nach Anspruch 1, **dadurch gekennzeichnet, dass** die Speichermittel zumindest einen Wärmespeicher (S1) und zumindest einen Kältespeicher (S2) aufweisen.

3. Anlage nach Anspruch 1 oder 2, **dadurch gekennzeichnet, dass** der Wärmeträgerfluidkreislauf einen dritten Wärmetauscher (E3) aufweist, der geeignet ist, Wärme mit der Außenluft auszutauschen, wobei die Mittel zur Zirkulation des Wärmeträgerfluids geeignet sind, die aus dem dritten Wärmetauscher (E3) stammende Kälte zu zumindest einer der Einrichtungen des Fahrzeugs zu übertragen, beispielsweise zum Verbrennungsmotor oder zum Elektromotor und/oder zur Batterie.

4. Anlage nach einem der Ansprüche 1 bis 3, **dadurch gekennzeichnet, dass** der Kältemittelkreislauf einen fünften Wärmetauscher (E5) aufweist, der geeignet ist, einen Verdampfer und/oder einen Kondensator zu bilden und Wärme mit der Luft außerhalb des Fahrzeugs auszutauschen.

5. Anlage nach einem der Ansprüche 1 bis 4, **dadurch gekennzeichnet, dass** der Kältemittelkreislauf erste Heizmittel (R1) aufweist, wie beispielsweise einen ersten elektrischen Widerstand, der geeignet ist, das Wärmeträgerfluid stromaufwärts von einer der Einrichtungen des Fahrzeugs zu erwärmen.

6. Anlage nach einem der Ansprüche 1 bis 5 und nach Anspruch 2, **dadurch gekennzeichnet, dass** der Wärmeträgerfluidkreislauf zweite Heizmittel (R2) aufweist, wie beispielsweise einen zweiten elektrischen Widerstand, der geeignet ist, das Wärmeträgerfluid zu erwärmen, das in den Wärmespeicher strömen soll.

7. Anlage nach einem der Ansprüche 1 bis 6, **dadurch gekennzeichnet, dass** sie dritte Heizmittel (R3), wie beispielsweise einen dritten elektrischen Widerstand, aufweist, die geeignet sind, die Luft zu erwärmen, die in den Fahrgastraum des Fahrzeugs münden soll.

8. Anlage nach einem der Ansprüche 1 bis 7, **dadurch gekennzeichnet, dass** der Wärmeträgerfluidkreislauf Abzweigmittel (V3, P4) aufweist, die geeignet sind, das gesamte Wärmeträgerfluid oder einen Teil davon aus den Heiz- und/oder Kühlmitteln (M1, M2, M3) abzuzweigen.

9. Anlage nach den Ansprüchen 1 bis 8, **dadurch gekennzeichnet, dass** sie Mittel zur Zirkulation des Wärmeträgerfluids und Mittel zur Zirkulation des Kältemittels aufweist, die dazu ausgelegt sind, gemäß zumindest einem der folgenden Modi zu arbeiten:
- einem Modus, in dem das Wärmeträgerfluid in einer Schleife zirkuliert, die zumindest nacheinander den Wärmespeicher (S1), optional die Heiz- und/oder Kühlmittel (M1, M2, M3), und den zweiten Wärmetauscher (E2) umfasst,
- einem Modus, in dem das Wärmeträgerfluid in einer Schleife zirkuliert, die zumindest nacheinander die Heiz- und/oder Kühlmittel (M1, M2, M3) und den ersten Wärmetauscher (E1) umfasst, wobei das Kältemittel in einer Schleife zirkuliert, die zumindest nacheinander einen Kompressor (C), den vierten Wärmetauscher (E4), einen ersten Druckminderer (D1) und den fünften Wärmetauscher (E5) umfasst, wobei ein erster Teil des Kältemittels anschließend durch einen zweiten Druckminderer (D2) und den ersten Wärmetauscher (E1) fließt, bevor er zum Kompressor (C) zurückfließt, während ein zweiter Teil des Kältemittels zum Kompressor (C) abgezweigt wird,
- einem Modus, in dem das Wärmeträgerfluid in einer ersten Schleife zirkuliert, die zumindest nacheinander die Heiz- und/oder Kühlmittel (M1) für eine erste Einrichtung, wie eine Batterie, und den ersten Wärmetauscher (E1) umfasst, sowie optional in einer zweiten Schleife, die zumindest nacheinander Heiz- und/oder Kühlmittel (M2) für eine zweite Einrichtung, wie einen Elektromotor, und/oder Heiz- und/oder Kühlmittel (M3) für eine dritte Einrichtung, wie einen Verbrennungsmotor, und den dritten Wärmetauscher (E3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst, wobei ein erster Teil des Kältemittels anschließend durch den ersten Wärmetauscher (E1) strömt, bevor er zum Kompressor (C) zurückfließt, während ein zweiter Teil des Kältemittels zum Kompressor (C) abgezweigt wird,
- einem Modus, in dem das Wärmeträgerfluid in einer ersten Schleife zirkuliert, die zumindest nacheinander die Heiz- und/oder Kühlmittel (M1, M2) für die erste Einrichtung und/oder die zweite Einrichtung und den ersten Wärmetauscher (E1) umfasst, sowie optional in einer zweiten Schleife, die zumindest nacheinander die Heiz- und/oder Kühlmittel (M3) für die dritte Einrichtung und den dritten Wärmetauscher (E3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst, wobei ein erster Teil des Kältemittels anschließend durch den ersten Wärmetauscher (E1) strömt, bevor er zum Kompressor (C) zurückfließt, während ein zweiter Teil des Kältemittels zum Kompressor (C) abgezweigt wird,
- einem Modus, in dem das Wärmeträgerfluid in einer Schleife zirkuliert, die zumindest nacheinander die Heiz- und/oder Kühlmittel (M1, M2, M3) und den ersten Wärmetauscher (E1) umfasst, wobei das Kältemittel in einer Schleife zirkuliert, die zumindest nacheinander den Kompressor (C), den vierten Wärmetauscher (E4), den zweiten Druckminderer (D2) und den ersten Wärmetauscher (E1) umfasst,
- einem Modus, in dem das Wärmeträgerfluid in einer ersten Schleife zirkuliert, die zumindest nacheinander die Heiz- und/oder Kühlmittel (M1) für die erste Einrichtung und den ersten Wärmetauscher (E1) umfasst, sowie optional in einer zweiten Schleife, die zumindest nacheinander die Heiz- und/oder Kühlmittel (M2, M3) für die zweite Einrichtung und/oder die dritte Einrichtung und den dritten Wärmetauscher (E3) umfasst, wobei das Kältemittel in einer Schleife zirkuliert, die zumindest nacheinander den Kompressor (C), den vierten Wärmetauscher (E4), den zweiten Druckminderer (D2) und den ersten Wärmetauscher (E1) umfasst,
- einem Modus, in dem das Wärmeträgerfluid in einer ersten Schleife zirkuliert, die zumindest nacheinander die Heiz- und/oder Kühlmittel (M1, M2) für die erste Einrichtung und/oder die zweite Einrichtung und den ersten Wärmetauscher (E1) umfasst, sowie optional in einer zweiten Schleife, die zumindest nacheinander die Heiz- und/oder Kühlmittel (M3) für die dritte Einrichtung und den dritten Wärmetauscher (E3) umfasst, wobei das Kältemittel in einer Schleife zirkuliert, die zumindest nacheinander den Kompressor (C), den vierten Wärmetauscher (E4), den zweiten Druckminderer (D2) und den ersten Wärmetauscher (E1) umfasst,
- einem Modus, in dem das Wärmeträgerfluid in einer Schleife zirkuliert, die zumindest nacheinander den Wärmespeicher (S1) und die Heiz- und/oder Kühlmittel (M1, M2, M3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst,
- einem Modus, in dem das Wärmeträgerfluid in einer ersten Schleife zirkuliert, die zumindest nacheinander den Wärmespeicher (S1) und die Heiz- und/oder Kühlmittel (M1) für die erste Einrichtung umfasst, sowie optional in einer zweiten Schleife, die zumindest nacheinander die Heiz- und/oder Kühlmittel (M2, M3) für die zweite Einrichtung und/oder die dritte Einrichtung und den dritten Wärmetauscher (E3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst,
- einem Modus, in dem das Wärmeträgerfluid in einer ersten Schleife zirkuliert, die zumindest nacheinander den Wärmespeicher (S1) und die Heiz- und/oder Kühlmittel (M1, M2) für die erste Einrichtung und/oder die zweite Einrichtung umfasst, sowie optional in einer zweiten Schleife, die zumindest nacheinander die Heiz- und/oder Kühlmittel (M3) für die dritte Einrichtung und den dritten Wärmetauscher (E3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst,
- einem Modus, in dem das Wärmeträgerfluid in einer Schleife zirkuliert, die zumindest nacheinander die Heiz- und/oder Kühlmittel (M1, M2, M3) und den dritten Wärmetauscher (E3) umfasst,
- einem Modus, in dem das Wärmeträgerfluid in einer Schleife zirkuliert, die zumindest nacheinander die Heiz- und/oder Kühlmittel (M1, M2, M3) und den dritten Wärmetauscher (E3) umfasst, wobei das Kältemittel in einer Schleife zirkuliert, die zumindest nacheinander den Kompressor (C), den vierten Wärmetauscher (E4), den ersten Druckminderer (D1) und den fünften Wärmetauscher (E5) umfasst,
- einem Modus, in dem das Wärmeträgerfluid in einer Schleife zirkuliert, die zumindest nacheinander die Heiz- und/oder Kühlmittel (M2, M3) für die zweite Einrichtung und/oder die dritte Einrichtung und den dritten Wärmetauscher (E3) umfasst, wobei das Kältemittel in einer Schleife zirkuliert, die zumindest nacheinander den Kompressor (C), den fünften Wärmetauscher (E5), einen dritten Druckminderer (D3) und den sechsten Wärmetauscher (E6) umfasst,
- einem Modus, in dem das Wärmeträgerfluid in einer ersten Schleife zirkuliert, die zumindest nacheinander die Heiz- und/oder Kühlmittel (M1) für die erste Einrichtung und den ersten Wärmetauscher (E1) umfasst, sowie optional in einer zweiten Schleife, die zumindest nacheinander die Heiz- und/oder Kühlmittel (M2, M3) für die zweite Einrichtung und/oder die dritte Einrichtung und den dritten Wärmetauscher (E3) umfasst, wobei das Kältemittel in einer Schleife zirkuliert, die zumindest nacheinander den Kompressor (C) und den fünften Wärmetauscher (E5) umfasst, wobei ein erster Teil des Kältemittels anschließend durch den zweiten Druckminderer (D2) und den ersten Wärmetauscher (E1) strömt, bevor er zum Kompressor (C) zurückfließt, während ein zweiter Teil des Kältemittels anschließend durch den dritten Druckminderer (D3) und den sechsten Wärmetauscher (E6) strömt, bevor er zum Kompressor (C) zurückfließt,
- einem Modus, in dem das Wärmeträgerfluid in einer ersten Schleife zirkuliert, die zumindest nacheinander die Heiz- und/oder Kühlmittel (M1, M2) für die erste Einrichtung und/oder die zweite Einrichtung und den ersten Wärmetauscher (E1) umfasst, sowie optional in einer zweiten Schleife, die zumindest nacheinander die Heiz- und/oder Kühlmittel (M3) für die dritte Einrichtung und den dritten Wärmetauscher (E3) umfasst, wobei das Kältemittel in einer Schleife zirkuliert, die zumindest nacheinander den Kompressor (C) und den fünften Wärmetauscher (E5) umfasst, wobei ein erster Teil des Kältemittels anschließend durch den zweiten Druckminderer (D2) und den ersten Wärmetauscher (E1) strömt, bevor er zum Kompressor (C) zurückfließt, während ein zweiter Teil des Kältemittels anschließend durch den dritten Druckminderer (D3) und den sechsten Wärmetauscher (E6) strömt, bevor er zum Kompressor (C) zurückfließt,
- einem Modus, in dem das Wärmeträgerfluid in einer Schleife zirkuliert, die zumindest nacheinander den Kältespeicher (S2), optional die Heiz- und/oder Kühlmittel (M1, M2, M3), und den zweiten Wärmetauscher (E2) umfasst,
- einem Modus, in dem das Wärmeträgerfluid in einer Schleife zirkuliert, die zumindest nacheinander die Heiz- und/oder Kühlmittel (M1, M2, M3) und den ersten Wärmetauscher (E1) umfasst, wobei das Kältemittel in einer Schleife zirkuliert, die zumindest nacheinander den Kompressor (C) und den fünften Wärmetauscher (E5) umfasst, wobei ein erster Teil des Kältemittels anschließend durch den zweiten Druckminderer (D2) und den ersten Wärmetauscher (E1) strömt, bevor er zum Kompressor (C) zurückfließt, während ein zweiter Teil des Kältemittels anschließend durch den dritten Druckminderer (D3) und den sechsten Wärmetauscher (E6) strömt, bevor er zum Kompressor (C) zurückfließt,
- einem Modus, in dem das Wärmeträgerfluid in einer Schleife zirkuliert, die zumindest nacheinander die Heiz- und/oder Kühlmittel (M1, M2, M3) und den dritten Wärmetauscher (E3) umfasst, wobei das Kältemittel in einer Schleife zirkuliert, die zumindest nacheinander den Kompressor (C), den fünften Wärmetauscher (E5), den dritten Druckminderer (D3) und den sechsten Wärmetauscher (E6) umfasst,
- einem Modus, in dem das Wärmeträgerfluid in einer ersten Schleife zirkuliert, die zumindest nacheinander den Kältespeicher (S2), optional die Heiz- und/oder Kühlmittel (M1) für die erste Einrichtung und den ersten Wärmetauscher (E1) umfasst, sowie optional in einer zweiten Schleife, die zumindest nacheinander die Heiz- und/oder Kühlmittel (M2, M3) für die zweite Einrichtung und/oder die dritte Einrichtung und den dritten Wärmetauscher (E3) umfasst, wobei das Kältemittel in einer Schleife zirkuliert, die zumindest nacheinander den Kompressor (C) und den fünften Wärmetauscher (E5) umfasst, wobei ein erster Teil des Kältemittels anschließend durch den zweiten Druckminderer (D2) und den ersten Wärmetauscher (E1) fließt, bevor er zum Kompressor (C) zurückfließt, während ein zweiter Teil des Kältemittels anschließend durch den dritten Druckminderer (D3) und den sechsten Wärmetauscher (E6) strömt, bevor er zum Kompressor (C) zurückfließt.

## Claims

1. Installation for the thermal conditioning of a passenger compartment and/or at least one component of a motor vehicle, comprising:
- a first circuit (1) for circulating a heat transfer fluid,
- a second circuit (2) for circulating a refrigerant fluid, capable of forming a heat pump type circuit,
the heat transfer fluid circuit (1) including heating and/or cooling means (M1, M2, M3) intended to heat and/or cool at least one component of a motor vehicle, such as for example a battery, an electric motor or an internal combustion engine, means (S1, S2) for storing calories and/or frigories comprising a phase-change material, a first heat exchanger (E1) forming an evaporator and capable of exchanging heat with the refrigerant circuit, and means for circulating the heat transfer fluid, capable of drawing frigories and/or calories from the storage means (S1, S2) or the first exchanger (E1), so as to transfer them to the heating and/or cooling means (M1, M2, M3),
the heat transfer fluid circuit (1) comprising a second heat exchanger (E2) capable of heating or cooling air intended to enter the passenger compartment of the vehicle, the means of circulation of the heat transfer fluid being capable of drawing frigories and/or calories from the storage means (S1, S2) or the first exchanger (E1), so as to transfer them to the second exchanger (E2),
the refrigerant fluid circuit comprising a sixth heat exchanger (E6) capable of forming an evaporator and capable of exchanging heat with air intended to enter the passenger compartment of the vehicle.
**characterized in that** the refrigerant fluid circuit comprises a fourth heat exchanger (E4) capable of forming a condenser and capable of exchanging heat with air intended to enter the passenger compartment of the vehicle.

2. Installation according to claim 1, **characterized in that** the storage means comprise at least one heat storage unit (S1) and at least one refrigerant storage unit (S2).

3. Installation according to claim 1 or 2, **characterized in that** the heat transfer fluid circuit comprises a third heat exchanger (E3) capable of exchanging heat with outside air, the means for circulating the heat transfer fluid being capable of transferring frigories from the third heat exchanger (E3) to at least one of the vehicle components, for example to the internal combustion engine or the electric motor and/or the battery.

4. Installation according to one of claims 1 to 3, **characterized in that** the refrigerant fluid circuit comprises a fifth heat exchanger (E5) capable of forming an evaporator and/or a condenser and capable of exchanging heat with air outside the vehicle.

5. Installation according to one of claims 1 to 4, **characterized in that** the heat transfer fluid circuit comprises first heating means (R1), such as for example a first electrical resistor, capable of heating the heat transfer fluid upstream of one of the vehicle components.

6. Installation according to one of claims 1 to 5 and claim 2, **characterized in that** the heat transfer fluid circuit comprises second heating means (R2), such as for example a second electrical resistor, suitable for heating the heat transfer fluid to be circulated in the heat storage device.

7. Installation according to one of claims 1 to 6, **characterized in that** it comprises third heating means (R3), such as for example a third electrical resistor, capable of heating the air intended to enter the passenger compartment of the vehicle.

8. Installation according to one of claims 1 to 7, **characterized in that** the heat transfer fluid circuit includes bypass means (V3, P4) capable of diverting all or part of the heat transfer fluid from said heating and/or cooling means (M1, M2, M3).

9. Installation according to claims 1 to 8, **characterized in that** it includes means for circulating the heat transfer fluid and means for circulating the refrigerant fluid designed to operate in at least one of the following modes:
- a mode in which the heat transfer fluid circulates in a loop comprising at least successively the heat storage unit (S1), optionally the heating and/or cooling means (M1, M2, M3), and the second exchanger (E2),
- a mode in which the heat transfer fluid circulates in a loop comprising at least successively the heating and/or cooling means (M1, M2, M3) and the first exchanger (E1), the refrigerant fluid circulating in a loop comprising at least successively a compressor (C), the fourth exchanger (E4), a first regulator (D1), the fifth exchanger (E5), a first part of the refrigerant fluid then passing through a second regulator (D2) and the first exchanger (E1) before returning to the compressor (C), while a second part of the refrigerant fluid is diverted to the compressor (C),
- a mode in which the heat transfer fluid flows in a first loop comprising at least successively the heating and/or cooling means (M1) of a first component, such as a battery, and the first exchanger (E1), and optionally in a second loop comprising at least successively the heating and/or cooling means (M2) of a second component, such as an electric motor, and/or the heating and/or cooling means (M3) of a third component, such as an internal combustion engine, and the third exchanger (E3), the refrigerant fluid circulating in a loop comprising at least successively the compressor (C), the fourth exchanger (E4), the first regulator (D1), the fifth exchanger (E5), a first part of the refrigerant fluid then passing through the first exchanger (E1) before returning to the compressor (C), while a second part of the refrigerant fluid is diverted towards the compressor (C),
- a mode in which the heat transfer fluid circulates in a first loop comprising at least successively the heating and/or cooling means (M1, M2) of the first and/or second component, and the first exchanger (E1), and optionally in a second loop comprising at least successively the heating and/or cooling means (M3) of the third component, and the third exchanger (E3), the refrigerant fluid circulating in a loop comprising at least successively the compressor (C), the fourth exchanger (E4), the first regulator (D1), the fifth exchanger (E5), a first part of the refrigerant fluid then passing through the first exchanger (E1) before returning to the compressor (C), while a second part of the refrigerant fluid is diverted towards the compressor (C),
- a mode in which the heat transfer fluid circulates in a loop comprising at least successively the heating and/or cooling means (M1, M2, M3) and the first exchanger (E1), the refrigerant fluid circulating in a loop comprising at least successively the compressor (C), the fourth exchanger (E4), the second regulator (D2) and the first exchanger (E1),
- a mode in which the heat transfer fluid flows in a first loop comprising at least successively the heating and/or cooling means (M1) of the first component, and the first exchanger (E1), and optionally in a second loop comprising at least successively the heating and/or cooling means (M2, M3) of the second and/or third component, and the third exchanger (E3), the refrigerant circulating in a loop comprising at least successively the compressor (C), the fourth exchanger (E4), the second regulator (D2) and the first exchanger (E1),
- a mode in which the heat transfer fluid circulates in a first loop comprising at least successively the heating and/or cooling means (M1, M2) of the first and/or the second component, and the first exchanger (E1), and optionally in a second loop comprising at least successively the heating and/or cooling means (M3) of the third component, and the third exchanger (E3), the refrigerant fluid circulating in a loop comprising at least successively the compressor (C), the fourth exchanger (E4), the second regulator (D2) and the first exchanger (E1),
- a mode in which the heat transfer fluid circulates in a loop comprising at least successively the heat storage unit (S1) and the heating and/or cooling means (M1, M2, M3), the refrigerant fluid circulating in a loop comprising at least successively the compressor (C), the fourth exchanger (E4), the first regulator (D1) and the fifth exchanger (E5),
- a mode in which the heat transfer fluid circulates in a first loop comprising at least successively the heat storage device (S1) and the heating and/or cooling means (M1) of the first component, and optionally in a second loop comprising at least successively the heating and/or cooling means (M2, M3) of the second and/or third component, and the third exchanger (E3), the refrigerant fluid circulating in a loop comprising at least successively the compressor (C), the fourth exchanger (E4), the first regulator (D1) and the fifth exchanger (E5),
- a mode in which the heat transfer fluid circulates in a first loop comprising at least successively the heat storage unit (S1) and the heating and/or cooling means (M1, M2) of the first and/or second component, and optionally in a second loop comprising at least successively the heating and/or cooling means (M3) of the third component, and the third exchanger (E3), the refrigerant fluid circulating in a loop comprising at least successively the compressor (C), the fourth exchanger (E4), the first regulator (D1) and the fifth exchanger (E5),
- a mode in which the heat transfer fluid circulates in a loop comprising at least successively the heating and/or cooling means (M1, M2, M3) and the third exchanger (E3),
- a mode in which the heat transfer fluid circulates in a loop comprising at least successively the heating and/or cooling means (M1, M2, M3), and the third exchanger (E3), the refrigerant fluid circulating in a loop comprising at least successively the compressor (C), the fourth exchanger (E4), the first regulator (D1), and the fifth exchanger (E5),
- a mode in which the heat transfer fluid circulates in a loop comprising at least successively the heating and/or cooling means (M2, M3) of the second and/or third component, and the third exchanger (E3), the refrigerant fluid circulating in a loop comprising at least successively the compressor (C), the fifth exchanger (E5), a third regulator (D3) and the sixth exchanger (E6),
- a mode in which the heat transfer fluid flows in a first loop comprising at least successively the heating and/or cooling means (M1) of the first component, and the first exchanger (E1), and optionally in a second loop comprising at least successively the heating and/or cooling means (M2, M3) of the second and/or the third component, and the third exchanger (E3), the refrigerant fluid circulating in a loop comprising at least successively the compressor (C), the fifth exchanger (E5), a first part of the refrigerant fluid then passing through the second regulator (D2) and the first exchanger (E1) before returning to the compressor (C), a second part of the refrigerant fluid then passing through the third regulator (D3) and the sixth exchanger (E6) before returning to the compressor (C),
- a mode in which the heat transfer fluid flows in a first loop comprising at least successively the heating and/or cooling means (M1, M2) of the first and/or second component, and the first exchanger (E1), and optionally in a second loop comprising at least successively the heating and/or cooling means (M3) of the third component, and the third exchanger (E3), the refrigerant fluid circulating in a loop comprising at least successively the compressor (C), the fifth exchanger (E5), a first part of the refrigerant fluid then passing through the second regulator (D2) and the first exchanger (E1) before returning to the compressor (C), a second part of the refrigerant fluid then passing through the third regulator (D3) and the sixth exchanger (E6) before returning to the compressor (C),
- a mode in which the heat transfer fluid circulates in a loop comprising at least successively the refrigerant storage unit (S2), optionally the heating and/or cooling means (M1, M2, M3), and the second exchanger (E2),
- a mode in which the heat transfer fluid circulates in a loop comprising at least successively the heating and/or cooling means (M1, M2, M3), and the first exchanger (E1), the refrigerant fluid circulating in a loop comprising at least successively the compressor (C), the fifth exchanger (E5), a first part of the refrigerant fluid then passing through the second regulator (D2) and the first exchanger (E1) before returning to the compressor (C), a second part of the refrigerant fluid then passing through the third regulator (D3) and the sixth exchanger (E6) before returning to the compressor (C),
- a mode in which the heat transfer fluid circulates in a loop comprising at least successively the heating and/or cooling means (M1, M2, M3), and the third exchanger (E3), the refrigerant fluid circulating in a loop comprising at least successively the compressor (C), the fifth exchanger (E5), the third regulator (D3) and the sixth exchanger (E6),
- a mode in which the heat transfer fluid flows in a first loop comprising at least successively the refrigerant storage unit (S2), optionally the heating and/or cooling means (M1) of the first component, and the first exchanger (E1), and optionally in a second loop comprising at least successively the heating and/or cooling means (M2, M3) of the second and/or the third component, and the third exchanger (E3), the refrigerant fluid circulating in a loop comprising at least successively the compressor (C), the fifth exchanger (E5), a first part of the refrigerant fluid passing through the second regulator (D2) and the first exchanger (E1) before returning to the compressor (C), a second part of the refrigerant fluid passing through the third regulator (D3) and the sixth exchanger (E6) before returning to the compressor (C).
